# EUROPÄISCHE PATENTSCHRIFT

(11) **EP 3 852 984 B1**
(45) Veröffentlichungstag und Bekanntmachung des Hinweises auf die Patenterteilung: **19.10.2022**
(21) Anmeldenummer: 19753306.0
(22) Anmeldetag: 08.08.2019
(51) Int. Cl.: B26D 7/18, G05B 19/4093, G05B 13/02, B23K 26/00, G05B 13/00, B26D 5/00, B23K 26/38

(54) **VERFAHREN UND VORRICHTUNG ZUM ENTNEHMEN EINES WERKSTÜCKTEILS AUS EINEM RESTWERKSTÜCK**
METHOD AND DEVICE FOR REMOVING A WORKPIECE PART FROM THE REMAINDER OF THE WORKPIECE
PROCÉDÉ ET DISPOSITIF POUR PRÉLEVER UNE PARTIE DE PIÈCE SUR UNE PIÈCE RESTANTE

(30) Priorität: 17.09.2018 DE 102018215738
(43) Veröffentlichungstag der Anmeldung: 28.07.2021
(73) Patentinhaber: TRUMPF Werkzeugmaschinen GmbH + Co. KG, 71254 Ditzingen (DE)
(72) Erfinder: WOLF, Dennis, 71277 Rutesheim (DE); ELSER, Michael, 70469 Stuttgart (DE)
(74) Vertreter: Kohler Schmid Möbus Patentanwälte
(86) Internationale Anmeldenummer: PCT/EP2019/071285
(87) Internationale Veröffentlichungsnummer: WO 2020/057852

(56) Entgegenhaltungen:
- DE-A1-102016 208 872
- DE-B3-102017 205 095

## Beschreibung

Die vorliegende Erfindung betrifft ein Verfahren zum Entnehmen eines Werkstückteils aus einem in einer Lagerungsebene gelagerten Restwerkstück, umfassend: Bewegen des Werkstückteils, das zwischen mindestens einem Ausdrückelement einer Ausdrückeinrichtung und mindestens einem Gegenhalteelement einer Gegenhalteeinrichtung geklemmt ist, entlang einer Entnahmerichtung, sowie prüfen, ob das Werkstückteil beim Bewegen entlang der Entnahmerichtung vollständig vom Restwerkstück getrennt wurde. Die Erfindung betrifft auch eine Vorrichtung zur Entnahme eines Werkstückteils aus einem in einer Lagerungsebene gelagerten Restwerkstück, umfassend: eine Ausdrückeinrichtung, die mindestens ein entlang einer Entnahmerichtung bewegbares Ausdrückelement aufweist, eine Gegenhalteeinrichtung, die mindestens ein entlang der Entnahmerichtung bewegbares Gegenhalteelement aufweist, sowie eine Sensoreinrichtung zur Prüfung, ob das zwischen dem mindestens einen Ausdrückelement und dem mindestens einen Gegenhalteelement geklemmte Werkstückteil vollständig vom Restwerkstück getrennt wurde.

An automatisierten Laserschneidmaschinen werden von einem (Rest-)Werkstück, z.B. von einem Blech, freigeschnittene Werkstückteile mit Hilfe von Greif-, Ausdrück- und/oder Sauggreifvorrichtungen aus dem umgebenden Restwerkstück (Restgitter) entnommen. Für eine prozesssichere Teileentnahme ist es wichtig zu prüfen, ob das Werkstückteil tatsächlich vom Restgitter getrennt wurde. Ist die Teileentnahme nicht erfolgreich, so sind Strategien für wiederholte Entnahmeversuche (Wiederholstrategien bzw. Retry-Strategien) notwendig, insbesondere, wenn die Teileentnahme nicht erst nach der vollständigen Bearbeitung des gesamten Werkstücks, sondern als Zwischenschritt bei der trennenden Bearbeitung mehrerer Werkstückteile erfolgt. Eine Laserschneidmaschine mit einer solchen integrierten Automatisierung ist beispielsweise in der DE102014209811B4 oder in der DE102016208872A1 beschrieben.

Aus dem Stand der Technik sind verschiedene Wiederholstrategien bei der Teileentnahme bekannt:
Aus JPH1080738A ist es bekannt, bei einer Entnahme von Werkstückteilen nach unten über eine in der Werkstückauflage angeordnete Teileklappe das Öffnen und Schließen der Teileklappe mehrfach zu wiederholen, wenn nicht detektiert wird, dass das Werkstückteil gefallen ist. Für die Zahl der Wiederholungen ist ein Grenzwert festgelegt.

Aus US6827544B2 ist es bekannt, zum Lösen von Werkstückteilen aus dem Restgitter die Teile mit einer Sauggreifeinrichtung zu greifen, die eine Mehrzahl von Sauggreifern aufweist, wobei die Aufsetzposition der Sauggreifeinrichtung bzw. der Sauggreifer auf dem Werkstückteil verändert wird, wenn bei der Teileentnahme kein ausreichender Vakuumaufbau erfolgt.

In WO2014023323A1 ist ein Verfahren zum Entnehmen eines durch trennendes Bearbeiten an einem plattenförmigen, auf einer Werkstückauflage aufliegenden Werkstücks gebildeten Werkstückteils aus einem Restwerkstück beschrieben. Das Werkstück wird zum Bearbeiten mittels einer Halteeinrichtung fixiert und ist entlang zumindest einer Richtung in einer X-Y-Ebene des Werkstücks verfahrbar. Für das Entnehmen wird das Werkstückteil mit einer (Saug-)Greifereinrichtung ergriffen. Bei der Erkennung einer Verhakung des Werkstückteils mit dem Restwerkstück wird zumindest eine Lösestrategie eingeleitet, bei der zumindest eine Verfahrbewegung der Halteeinrichtung, der Greifereinrichtung oder der Greifereinrichtung und der Halteeinrichtung relativ zueinander in der X-Y-Ebene angesteuert wird. Außerdem wird beschrieben, dass zusätzlich eine Verfahrbewegung der Halteeinrichtung und/oder der Greifereinrichtung in Z-Richtung durchgeführt werden kann.

Bei der Entnahme von Werkstückteilen aus dem Restgitter, bei der die Werkstückteile gleichzeitig von einer Ausdrückeinrichtung beaufschlagt und mit einem Gegenhalter gestützt werden ("Sandwich-Entnahme"), besteht bei der Anwendung der in WO2014023323A1 beschriebenen Lösestrategie die Gefahr, dass die auf das Werkstückteil und die Entnahmeeinrichtungen, d.h. auf die Ausdrückeinrichtung bzw. auf die Gegenhalteeinrichtung, wirkenden Kräfte zu groß werden, so dass diese beschädigt werden können; beispielsweise können bei einer solchen Lösestrategie Aushebeelemente in Form von Aushebestiften der Ausdrückeinrichtung verbogen werden.

### Aufgabe der Erfindung

Der Erfindung liegt die Aufgabe zugrunde, ein Verfahren und eine Vorrichtung zur Entnahme von Werkstückteilen mit einer an die Sandwich-Entnahme angepassten Wiederholstrategie bereitzustellen.

### Gegenstand der Erfindung

Diese Aufgabe wird erfindungsgemäß durch ein Verfahren der eingangs genannten Art gelöst, weiter umfassend: Verringern oder vollständiges Aufheben der Klemmung des Werkstückteils und anschließendes Wiederherstellen der Klemmung des Werkstückteils, wenn beim Prüfen festgestellt wird, dass das Werkstückteil nicht vollständig vom Restwerkstück getrennt wurde. Unter dem Verringern der Klemmung wird dabei verstanden, die auf das Werkstückteil einwirkende Klemmkraft des Ausdrückelements und/oder des Gegenhalteelements stufenweise oder kontinuierlich zu reduzieren. Das Verringern oder Aufheben der Klemmung kann durch eine Drucksteuerung bzw. -regelung oder durch Bewegen des mindestens einen Ausdrückelements und/oder des mindestens einen Gegenhalteelements entlang der Entnahmerichtung erfolgen. Beim vollständigen Aufheben der Klemmung wirkt auf das Werkstückteil keine Klemmkraft mehr. Zusätzlich kann beim vollständigen Aufheben der Klemmung auch der mechanische Kontakt zwischen dem Ausdrückelement und/oder dem Gegenhalteelement und dem Werkstückteil aufgehoben werden.

Die Erfinder haben erkannt, dass eine hohe Entnahmewahrscheinlichkeit dadurch erreicht werden kann, dass zwischen den Entnahmeeinrichtungen und dem Werkstückteil sowie dem Restwerkstück / Restgitter im Wechsel mechanische Spannungen auf- und wieder abgebaut werden. Im Zusammenspiel der Komponenten wird beim Retry in verschiedenen Ausprägungen das "Sandwich" also teilweise oder ganz aufgelöst und anschließend wieder hergestellt. Dadurch können mechanische Spannungen gelöst werden, so dass sich das Werkstückteil aus einer verklemmten Lage lösen kann. Hierbei ist es wichtig, dass im Zusammenspiel der Komponenten keine Relativbewegungen ausgelöst werden, die die Entnahmeeinrichtungen oder das Werkstückteil beschädigen können. Das Lösen der Klemmung erfolgt typischerweise von einer Seite her, d.h. durch Verringerung der von dieser Seite einwirkenden Kraft und/oder durch die Bewegung des mindestens einen Ausdrückelements oder des mindestens einen Gegenhalteelements entlang der Entnahmerichtung von dem Werkstückteil weg, so dass der mechanische Kontakt zwischen dem Ausdrückelement oder dem Gegenhalteelement und dem Werkstückteil aufgehoben wird. Unter einer Bewegung entlang der Entnahmerichtung wird im Sinne dieser Anmeldung eine Bewegung in und/oder entgegen der Entnahmerichtung verstanden, d.h. bei einer Entnahmerichtung, die in Schwerkraftrichtung (Z-Richtung) verläuft, eine Bewegung in positiver und/oder in negativer Z-Richtung.

Bei einer Variante wird der Schritt des Verringerns/vollständigen Aufhebens der Klemmung und des Wiederherstellens der Klemmung des Werkstückteils mehrfach durchgeführt. In der Regel erhöht das mehrfache Aufbauen und anschließende Lösen von mechanischen Spannungen die Entnahmewahrscheinlichkeit.

Bei einer weiteren Variante wird beim vollständigen Aufheben der Klemmung zunächst der Kontakt zwischen dem Ausdrückelement und dem Werkstückteil aufgehoben. Vorzugsweise wird beim Lösen der Klemmung als erstes das einen mechanischen Druck auf das Werkstückteil ausübende Ausdrückelement vom Werkstückteil gelöst, so dass die stützende, das Werkstückteil in der Waagerechten haltende Wirkung des Gegenhalters bzw. des/der Gegenhalteelemente erhalten bleibt und das Werkstückteil nicht gegenüber dem Restwerkstück kippt oder verrutscht.

Bei einer weiteren Variante umfasst das Verfahren zusätzlich: Klemmen des Restwerkstücks zwischen einer Werkstückauflage zur Lagerung des Restwerkstücks in der Lagerungsebene und einem weiteren Gegenhalteelement beim Bewegen des Werkstückteils entlang der Entnahmerichtung, wobei bevorzugt vor dem Verringern bzw. vollständigen Aufheben der Klemmung des Werkstückteils die Klemmung des Restwerkstücks verringert oder vollständig aufgehoben wird. Es hat sich für die Entnahme als günstig erwiesen, wenn zusätzlich auch das Restgitter relativ zur Werkstückauflage fixiert wird, was durch mindestens ein (weiteres) Gegenhalteelement erreicht werden kann, das als Niederhalter dient. Bevorzugt wird beim Retry auch die Vorspannung des weiteren Gegenhalteelements gegen das Restgitter aufgehoben, indem die Anpresskraft des Gegenhalteelements auf das Restgitter verringert oder das weitere Gegenhalteelement entlang der Entnahmerichtung bewegt wird und auf diese Weise der Kontakt zwischen dem weiteren Gegenhalteelement und dem Restwerkstück gelöst wird.

Beim Verringern bzw. Lösen der Klemmung des Werkstückteils und beim anschließenden Wiederherstellen der Klemmung des Werkstückteils kann das Werkstückteil an seiner Position entlang der Entnahmerichtung verbleiben. Alternativ ist es möglich, die Position des Werkstückteils entlang der Entnahmerichtung bei gelöster Klemmung des Werkstücks zu verändern.

Bei einer Variante wird beim Lösen der Klemmung das Werkstückteil an dem mindestens einen Gegenhalteelement der in einem Fixierzustand befindlichen Gegenhalteeinrichtung fixiert. In diesem Fall kann die Gegenhalteeinrichtung beispielsweise wie in der eingangs zitierten DE102014209811B4 ausgebildet sein.

Die Gegenhalteeinrichtung ist in diesem Fall zwischen einem Fixierzustand zum Fixieren des Werkstückteils an der Gegenhalteeinrichtung und einem Freigabezustand zum Lösen des Werkstückteils von der Gegenhalteeinrichtung umschaltbar. Dazu kann die Gegenhalteeinrichtung beispielsweise mit Vakuum beaufschlagbare Sauggreifer umfassen, die mit einem gemeinsamen Gegenhalteelement zusammenwirken oder die als einzelne Gegenhalteelemente dienen. Durch die Fixierung des Werkstückteils an der Gegenhalteeinrichtung bzw. an dem oder den Gegenhalteelement(en) können das/die Ausdrückelement(e), die in diesem Fall an der Unterseite des Werkstückteils angreifen, um dieses gegen die Gegenhalteeinrichtung anzudrücken, abgesenkt werden, wodurch sich die Klemmung auflöst, während das Werkstückteil an der durch die Fixierung an dem Gegenhalteelement vorgegebenen Position entlang der Entnahmerichtung verbleibt. Das Wiederherstellen der Klemmung kann in diesem Fall durch erneutes Anheben des bzw. der Ausdrückelemente und Andrücken gegen die Unterseite des Werkstückteils zum Spannen gegen die Gegenhalteeinrichtung hergestellt werden. Dieses Auf- und Abbauen der Spannung kann ggf. mehrfach wiederholt werden, um das Werkstückteil vollständig vom Restwerkstück zu trennen. Um zu prüfen, ob das (elektrisch leitfähige) Werkstückteil vollständig vom (elektrisch leitfähigen) Restwerkstück getrennt wurde, sowie ob das Werkstückteil an dem im Fixierzustand befindlichen Gegenhalteeinrichtung fixiert ist, kann beispielsweise eine Sensoreinrichtung verwendet werden, wie sie in der DE102017205095B3 beschrieben ist, auf der die zweiteilige Form der unabhängigen Ansprüche 1 und 13 beruht.

Bei einer weiteren Variante bewegt die Gegenhalteeinrichtung bei aufgehobener Klemmung das Werkstückteil in mindestens einer Richtung senkrecht zur Entnahmerichtung relativ zum Restwerkstück und bevorzugt zusätzlich entlang der Entnahmerichtung relativ zum Restwerkstück. Wie in der eingangs beschriebenen WO2014023323A1 dargestellt ist, kann die Lösestrategie bzw. ein Teil der Lösestrategie darin bestehen, dass das Werkstückteil mit Bewegungen mit vergleichsweise kleiner Amplitude in mindestens einer Raumrichtung in der bzw. parallel zur Lagerungsebene (z.B. der X-Y-Ebene) bewegt wird, die durch die Werkstückauflage definiert ist. Insbesondere kann es sich bei der Bewegung um eine ggf. ruckartige Hin- und Herbewegung des Werkstückteils relativ zum Restwerkstück handeln. Der Bewegung parallel zur Lagerungsebene kann eine Bewegung entlang der Entnahmerichtung (in Z-Richtung) mit vergleichsweise kleiner Amplitude überlagert werden. Bei dieser Bewegung in Entnahmerichtung kann es sich insbesondere um eine abwechselnde Hebe- und Senkbewegung des Werkstückteils handeln. Die Bewegung der Gegenhalteeinrichtung bei aufgehobener Klemmung kann insbesondere erfolgen, wenn das Werkstückteil an der im Fixierzustand befindlichen Gegenhalteeinrichtung fixiert ist, wie dies weiter oben beschrieben ist.

Bei einer weiteren Variante wird das Werkstückteil mittels mehrerer Gegenhalteelemente der Gegenhalteeinrichtung geklemmt, die jeweils gegenläufig entlang der Entnahmerichtung bewegt werden, um das Werkstückteil vom Restwerkstück zu trennen. Bei dieser Variante wird ausgenutzt, dass die Gegenhalteelemente, die für das Stützen des zu entnehmenden Werkstückteils zusammenwirken, einzeln entlang der Entnahmerichtung bewegt bzw. verschoben werden können, insbesondere wenn diese wie weiter unten beschrieben als Unterstützungsschlitten ausgebildet sind. Durch eine gegenläufige Bewegung der Gegenhalteelemente entlang der Entnahmerichtung über einen vergleichsweise geringen Verfahrweg von wenigen Millimetern können Werkstückteile vom Restwerkstück "freigerüttelt" werden. Die gegenläufige Bewegung der Gegenhalteelemente kann hierbei gleichzeitig oder zeitlich versetzt erfolgen.

Bei dem in der DE1 02014209811 B4 beschriebenen Verfahren zur Entnahme des Werkstückteils aus dem Restwerkstück wird das Werkstückteil von einer unterhalb der Lagerungsebene befindlichen Ausdrückeinrichtung vorgespannt und hierbei durch eine oberhalb der Lagerungsebene angeordnete Gegenhalteeinrichtung abgestützt, die zwischen einem Fixierungszustand und einem Freigabezustand umschaltbar ist. Die Ausdrückeinrichtung dient hierbei als Aushebeeinrichtung zum Ausheben des Werkstückteils in eine Entnahmeposition, die sich oberhalb der Lagerungsebene befindet. Es ist aber auch der umgekehrte Fall möglich, d.h. dass das Werkstückteil in eine Entnahmeposition unterhalb der Lagerungsebene abgesenkt wird, wie nachfolgend beschrieben wird.

Bei einer Variante des Verfahrens wird beim Bewegen des Werkstückteils entlang der Entnahmerichtung eine das Werkstückteil stützende Auflagefläche des mindestens einen Gegenhalteelements unter die Lagerungsebene des Restwerkstücks abgesenkt und während des Absenkens drückt das mindestens eine Ausdrückelement von oben gegen das Werkstückteil. Bei dieser Variante des Verfahrens wird das Werkstückteil bei der Bewegung aus der Lagerungsebene entlang der Entnahmerichtung abgesenkt. In diesem Fall drückt das mindestens eine Ausdrückelement auf die Oberseite des Werkstückteils, um das Werkstückteil beim Absenken auf der Auflagefläche des Gegenhalteelements zu fixieren. Bei dem Gegenhalteelement, an dem die Auflagefläche gebildet ist, kann es sich in diesem Fall beispielsweise um einen Unterstützungsschlitten einer Maschine zum trennenden Bearbeiten eines plattenförmigen Werkstücks handeln, wie sie in der eingangs zitierten DE102016208872A1 beschrieben ist. Bei der dort beschriebenen Maschine ist die Auflagefläche - in der Regel gemeinsam mit dem Unterstützungsschlitten - unter die Lagerungsebene absenkbar. Das Werkstückteil kann auf mehreren, vorzugsweise zwei Unterstützungsschlitten aufliegen, die gemeinsam absenkbar, aber auch gegenläufig entlang der Entnahmerichtung bewegbar sind.

Bei dem Ausdrückelement kann es sich um eine Kolbenstange einer Ausdrückeinrichtung in Form eines Ausdrückzylinders handeln, der an einem Bearbeitungskopf der Maschine angebracht ist. Der Ausdrückzylinder kann durch eine Bewegung des Bearbeitungskopfs entlang der Entnahmerichtung bewegt werden und das Ausdrückelement in Form der Kolbenstange kann relativ zu dem Ausdrückzylinder zumindest zwischen einer oberen und einer unteren Endlage verschoben werden.

Es versteht sich, dass eine Vielzahl von anderen Ausgestaltungen der Gegenhalteeinrichtung und/oder der Ausdrückeinrichtung möglich sind, die in der vorliegenden Anmeldung nicht umfassend dargestellt werden können.

Bei einer weiteren Variante umfasst das Verfahren: Bewegen des Werkstückteils bei aufgehobener Klemmung entlang der Entnahmerichtung in die Lagerungsebene des Restwerkstücks, Wiederherstellen der Klemmung des Werkstückteils zwischen mindestens einem Ausdrückelement der Ausdrückeinrichtung und mindestens einem Gegenhalteelement der Gegenhalteeinrichtung, sowie erneutes Bewegen des geklemmten Werkstückteils entlang der Entnahmerichtung bevorzugt mit einer Geschwindigkeit, die sich von der Geschwindigkeit beim Bewegen des Werkstückteils entlang der Entnahmerichtung unterscheidet.

In diesem Fall wird das Lösen der Klemmung dazu genutzt, das Werkstückteil zurück in die Lagerungsebene zu bewegen, wo das Werkstück erneut geklemmt wird, d.h. das Werkstückteil wird für einen weiteren Entnahmeversuch in die Ausgangsposition entlang der Entnahmerichtung bewegt, in der auch der erste bzw. ein vorhergehender Entnahmeversuch gestartet wurde. Von dieser Ausgangsposition des Werkstückteils in der Lagerungsebene wird erneut eine "Sandwich-Entnahme" bzw. ein Retry durchgeführt, d.h. das Werkstückteil wird erneut in Entnahmerichtung in eine Entnahmeposition bewegt. Um die Entnahmewahrscheinlichkeit bei dem wiederholten Entnahmeversuch zu erhöhen, wird in der Regel die Geschwindigkeit der Bewegung des Werkstückteils verändert, wobei die Bewegung entlang der Entnahmerichtung entweder langsamer, d.h. mit geringerer Geschwindigkeit, oder mit höherer Geschwindigkeit, ggf. ruckartig, d.h. mit höherer Beschleunigung, durchgeführt wird. Auch bei einer solchen ruckartigen Bewegung mit einer hohen Beschleunigung bewegen sich typischerweise sowohl das Gegenhalteelement bzw. die Gegenhalteeinrichtung als auch das bzw. die Ausdrückelemente ruckartig, aber synchron, so dass das Werkstückteil geklemmt bleibt. Beispielsweise können bei einer ruckartigen, gesteuerten Bewegung der Gegenhalteeinrichtung auch die Ausdrückelemente, die beispielsweise in Form von Ausdrückstiften ausgebildet sind, der gesteuerten ruckartigen Bewegung der Gegenhalteeinrichtung folgen, auch wenn diese selbst nicht gesteuert in der Entnahmerichtung bewegt werden. Die Ausdrückelemente werden in diesem Fall in der Regel mit einem Pneumatik-Druck beaufschlagt, um das Ausdrücken bzw. das Ausheben des Werkstückteils zu bewirken, der ausreichend ist, um auch bei einer ruckartigen Bewegung das Werkstückteil zu klemmen bzw. eine mir der Bewegung der Gegenhalteeinrichtung synchrone Bewegung zu erzeugen.

Einzelne oder alle Verfahrensschritte des weiter oben beschriebenen Retry-Verfahrens können auch mehrfach wiederholt werden, bis eine jeweils vorgegebene Anzahl an Wiederholungen erreicht ist. Für den Fall, dass auch der letzte Schritt des Retry-Verfahrens nicht zu einer erfolgreichen Entnahme des Werkstückteils führt, wird typischerweise die Bearbeitung gestoppt und eine Fehlermeldung ausgegeben.

Bei einer weiteren Variante umfasst das Verfahren: Speichern von Geometrie-Parametern des zu entnehmenden Werkstückteils, eines Entnahmeergebnisses und von Betriebs-Parametersätzen des mindestens einen Ausdrückelements und/oder des mindestens einen Gegenhalteelements beim Aufheben und anschließenden Wiederherstellen der Klemmung des Werkstückteils und bevorzugt des Restwerkstücks und/oder beim erneuten Bewegen des Werkstückteils entlang der Entnahmerichtung in einem Ergebnisspeicher. Das Speichern des Entnahmeergebnisses in dem Ergebnisspeicher kann ggf. darin bestehen, nur bei einem positiven Entnahmeergebnis die Geometrie-Parameter des zu entnehmenden Werkstückteils und die zugehörigen Betriebs-Parameter in dem Ergebnisspeicher zu speichern. Bei dem Entnahmeergebnis handelt es sich typischerweise um einen binären Wert, z.B. "Entnahme erfolgreich" oder "Entnahme nicht erfolgreich". Für den Fall, dass die Betriebs-Parametersätze und die Geometrie-Parameter auch bei einer nicht erfolgreichen Entnahme in dem Ergebnisspeicher abgespeichert werden, ist es zusätzlich erforderlich, auch das Entnahmeergebnis in dem Ergebnisspeicher zu speichern.

Bei dieser Variante des Verfahrens kann durch eine Analyse des Retry-Verfahrens beispielsweise innerhalb der Maschinensteuerung oder in einer auf einer separaten computerimplementierten Programmiersoftware oder durch ein cloud-basiertes Anwendungsprogramm ein Zusammenhang zwischen Geometrie-Parametern bzw. der Geometrie des zu entnehmenden Werkstückteils und dem oder den erfolgreichen Verfahrensschritten ermittelt werden, durch den für neue zu entnehmende Werkstückteile das Verfahren so abgewandelt werden kann, dass nur die erfolgreichen Schritte angewendet werden. Dies führt zu einer Zeitersparnis bei der Teileentnahme. Dazu werden in dem Ergebnisspeicher, beispielsweise in der Maschinensteuerung, auf einem zentralen Computer oder in der Cloud Daten darüber gesammelt, bei welcher Teilegeometrie welche Retry-Schritte zu einer erfolgreichen Teileentnahme führen bzw. mit welchen Betriebs-Parametern die Entnahmeeinrichtungen, d.h. die Ausdrückeinrichtung bzw. deren Ausdrückelemente und/oder die Gegenhalteeinrichtung bzw. deren Gegenhalteelemente von einer Steuerungseinrichtung angesteuert werden sollten, damit die Entnahme erfolgreich ist.

Bei den Betriebs-Parametern der Betriebs-Parametersätze kann es sich im einfachsten Fall um die Anfangs- und/oder Endpositionen der Entnahmeeinrichtungen bzw. von deren Entnahmeelementen handeln. Zusätzlich können die Betriebs-Parameter Informationen über die Geschwindigkeit der Bewegung des/der Ausdrückelemente bzw. des/der Gegenhalteelemente bei der Bewegung entlang der Entnahmerichtung enthalten. Durch die Auswertung der Daten vieler Maschinen können auf diese Weise Zusammenhänge zwischen der Teilegeometrie und den tatsächlich benötigten Retry-Schritten ermittelt werden. Gegebenenfalls kann in der Vorrichtung eine Anzahl von vorgegebenen Betriebs-Parametersätzen für den Retry vorhanden sein und bei den in dem Ergebnisspeicher gespeicherten Betriebs-Parametern handelt es sich um einen Index zur Auswahl eines jeweiligen vorgegebenen Betriebs-Parametersatzes.

Bei einer Variante umfasst das Verfahren: Automatisches Erstellen einer Entnahmeprognose für ein zu entnehmendes Werkstückteil anhand von Geometrie-Parametern des zu entnehmenden Werkstückteils und der im Ergebnisspeicher gespeicherten Geometrie-Parameter von bereits entnommenen Werkstückteilen und einem jeweils zugehörigen Entnahmeergebnis. Mit Hilfe des Ergebnisspeichers kann in diesem Fall für weitere zu entnehmende Werkstückteile die Erfolgswahrscheinlichkeit der Entnahme anhand ihrer Geometrie bewertet bzw. eine Entnahmeprognose erstellt werden, wie dies beispielsweise in der DE102018208126.3 beschrieben ist. Bei der Erstellung des Steuerungsprogramms für eine Vorrichtung zur Entnahme, beispielsweise in Form einer Laserbearbeitungsmaschine, kann die Prognose entweder in der Maschinensteuerung oder im Programmiersystem, das üblicherweise als Software in einem von der Maschinensteuerung unabhängigen Computer implementiert ist, erstellt und eine Warnung ausgegeben werden, wenn eine erfolgreiche Teileentnahme nicht zu erwarten ist. Es können außerdem dem Programmierer Vorschläge für geeignete Änderungen an der Teilekontur bzw. an den Geometrie-Parametern des Werkstückteils gemacht werden.

Bei einer weiteren Variante umfasst das Verfahren: Automatisches Auswählen von in dem Ergebnisspeicher gespeicherten Betriebs-Parametersätzen in Abhängigkeit von Geometrie-Parametern des zu entnehmenden Werkstückteils. Durch die Analyse von an vielen Maschinen gewonnenen Erkenntnissen über die Zusammenhänge zwischen Teilegeometrie und erfolgreichen Retry-Schritten, die jeweils durch einen Betriebs-Parametersatz beschrieben werden bzw. einem Betriebs-Parametersatz entsprechen, können diese Zusammenhänge in die Maschinensteuerung oder im Programmiersystem implementiert werden, so dass diese(s) für ähnliche Werkstückteile die zielführendste Retry-Strategie auswählen kann. Zu diesem Zweck wird von der Vorrichtung der Ergebnisspeicher ausgelesen oder die Daten des Ergebnisspeichers werden an das Programmiersystem übertragen. Auf diese Weise kann an Stelle einer starren, vorgegebenen Abfolge von Retry-Schritten, die sequentiell abgearbeitet werden, um das Werkstückteil zu entnehmen, eine für die jeweilige Geometrie des zu entnehmenden Werkstückteils optimierte Abfolge von Retry-Schritten durchgeführt bzw. ein optimierter Betriebs-Parametersatz oder eine optimierte Abfolge von Betriebs-Parametersätzen ausgewählt werden.

Ein weiterer Aspekt der Erfindung betrifft eine Vorrichtung der eingangs genannten Art, weiter umfassend: eine Steuerungseinrichtung, die konfiguriert ist, die Ausdrückeinrichtung und/oder die Gegenhalteeinrichtung anzusteuern, um das zwischen mindestens einem Ausdrückelement der Ausdrückeinrichtung und mindestens einem Gegenhalteelement der Gegenhalteeinrichtung geklemmte Werkstück entlang der Entnahmerichtung zu bewegen, sowie für den Fall, dass beim Prüfen, ob beim Bewegen entlang der Entnahmerichtung das Werkstückteil vollständig vom Restwerkstück getrennt wurde, festgestellt wird, dass das Werkstückteil nicht vollständig vom Restwerkstück getrennt wurde, die Klemmung des Werkstückteils aufzuheben und die Klemmung des Werkstückteils anschließend wiederherzustellen.

Bei der Vorrichtung zur Entnahme des Werkstückteils aus dem Restwerkstück kann es sich um eine Maschine zum trennenden Bearbeiten eines Werkstücks handeln, beispielsweise wie sie in der eingangs zitierten DE102016208872A1 beschrieben ist. Die Entnahme des Werkstückteils kann in diesem Fall über einen zwischen zwei Werkstückauflageflächen gebildeten Spalt erfolgen. Die Vorrichtung zur Entnahme kann auch gemeinsam mit einer solchen Maschine zum trennenden Bearbeiten eine maschinelle Anordnung bilden, wie dies in der eingangs zitierten DE102014209811B4 beschrieben ist. Die Maschine zum trennenden Bearbeiten und die Vorrichtung zur Entnahme des Werkstückteils können in diesem Fall eine gemeinsame Werkstücklagerung aufweisen, welche die Lagerungsebene für das Werkstück bzw. das Restwerkstück definiert.

Bei einer Ausführungsform ist die Steuerungseinrichtung mit einem Ergebnisspeicher verbunden oder beinhaltet diesen und ist ausgebildet, eine automatisierte Entnahmeprognose für die Entnahmewahrscheinlichkeit eines zu entnehmenden Werkstückteils anhand von Geometrie-Parametern des Werkstückteils und von im Ergebnisspeicher gespeicherten Geometrie-Parametern von bereits entnommenen Werkstückteilen und einem jeweils zugehörigen Entnahmeergebnis zu erstellen. Mit Hilfe des Ergebnisspeichers kann die Entnahmeprognose für das zu entnehmende Werkstückteil auf das jeweilige Entnahmeergebnis von bereits entnommenen Werkstückteilen mit ähnlichen Geometrie-Parametern gestützt werden.

Bei einer weiteren Ausführungsform weist die Steuerungseinrichtung Betriebs-Parametersätze des mindestens einen Ausdrückelements und/oder des mindestens einen Gegenhalteelements beim Verringern oder vollständigen Aufheben der Klemmung des Werkstückteils und beim anschließenden Wiederherstellen der Klemmung des Werkstückteils und/oder beim erneuten Bewegen des Werkstückteils entlang der Entnahmerichtung für eine Mehrzahl von Werkstückteilen mit unterschiedlichen Geometrie-Parametern auf und die Steuerungseinrichtung ist ausgebildet, anhand der Geometrie-Parameter des zu entnehmenden Werkstückteils mindestens einen Betriebs-Parametersatz für die Entnahme des Werkstückteils aus dem Restwerkstück auszuwählen. Typischerweise wird ein Betriebs-Parametersatz ausgewählt, der zu einem Werkstückteil gehört, dessen Geometrie-Parameter den Geometrie-Parametern des zu entnehmenden Werkstückteils möglichst ähnlich sind.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung einer Maschine zur Laserbearbeitung mit zwei fest stehenden Werkstückauflageflächen, zwischen denen ein sich in Y-Richtung erstreckender Spalt gebildet ist, in dem zwei Unterstützungsschlitten bewegbar sind, die als Gegenhalteelemente für eine an einem Bearbeitungskopf angebrachte Ausdrückeinrichtung dienen,
- Fig. 2a-g: schematische Darstellungen mehrerer Schritte eines Verfahrens zum Entnehmen eines vom Restgitter freigeschnittenen Werkstückteils,
- Fig. 3: eine schematische Darstellung einer Vorrichtung zur Entnahme eines von einem Restwerkstück freigetrennten Werkstückteils mit jeweils zwei Ausdrückeinrichtungen und Gegenhalteeinrichtungen, sowie
- Fig. 4a-e: schematische Darstellungen mehrerer Schritte eines Verfahrens zum Entnehmen des freigetrennten Werkstückteils mit Hilfe der Vorrichtung von Fig. 3.

In der folgenden Beschreibung der Zeichnungen werden für gleiche bzw. funktionsgleiche Bauteile identische Bezugszeichen verwendet.

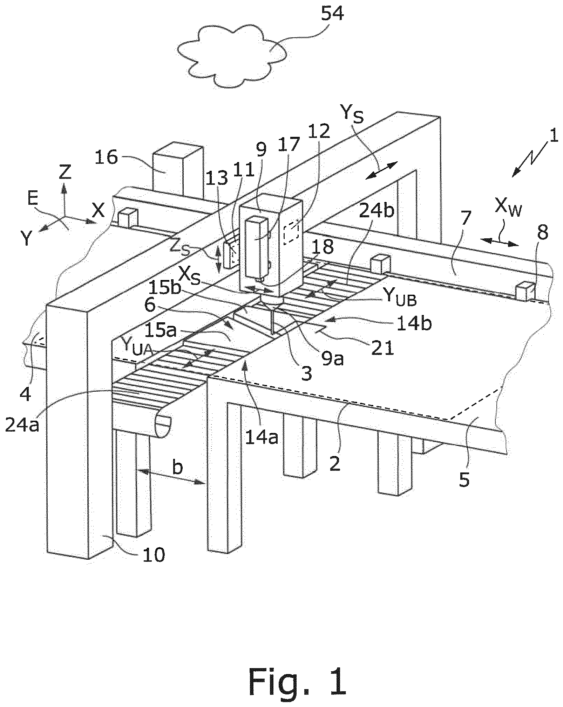

**Fig. 1** zeigt einen beispielhaften Aufbau einer Vorrichtung 1 zur Laserbearbeitung, genauer gesagt zum Laserschneiden, eines gestrichelt dargestellten plattenförmigen Werkstücks **2** mittels eines Bearbeitungsstrahls in Form eines Laserstrahls **3.** Zur schneidenden Bearbeitung des Werkstücks 2 kann an Stelle des Laserstrahls 3 auch eine andere Art von thermischem Bearbeitungsstrahl, beispielsweise eine Plasmafackel, oder ein Wasserstrahl eingesetzt werden. Alternativ kann die Vorrichtung 1 auch zum mechanischen Trennen des Werkstücks 2 ausgebildet sein, beispielsweise als Stanzmaschine oder als Stanz-Laser-Kombinationsmaschine.

Das Werkstück 2 liegt bei der Bearbeitung auf zwei fest stehenden Werkstückauflageflächen **4, 5** auf, die im gezeigten Beispiel die Oberseiten von zwei Werkstücktischen bilden und die eine Werkstück-Lagerungsebene E (X-Y-Ebene eines XYZ-Koordinatensystems) zur Auflage des Werkstücks 2 definieren. Mittels einer herkömmlichen Bewegungs- und Halteeinrichtung **7,** welche einen Antrieb sowie Klemmeinrichtungen **8** in Form von Spannpratzen zum Festhalten des Werkstücks 2 aufweist, kann das Werkstück 2 auf den Werkstückauflageflächen 4, 5 in einer ersten Richtung X (im Folgenden: X-Richtung) gesteuert verschoben und an eine vorgegebene Werkstückposition X_{W} bewegt werden. Um die Bewegung des Werkstücks 2 in X-Richtung zu erleichtern, können auf den in Fig. 1 gezeigten Werkstücktischen Bürsten, Kugeln oder Gleitrollen angebracht sein, die die eigentlichen Werkstückauflageflächen 4, 5 darstellen.

Zwischen den beiden fest stehenden Werkstückauflageflächen 4, 5 ist ein Spalt **6** gebildet, der seitlich von den fest stehenden Werkstückauflageflächen 4, 5 begrenzt wird. Der Spalt 6 erstreckt sich in einer zweiten Richtung (im Folgenden: Y-Richtung) über die gesamte Breite der beiden Werkstückauflageflächen 4, 5. Ein Laserschneidkopf **9,** der den Laserstrahl 3 auf das Werkstück 2 ausrichtet und fokussiert, ist mittels eines als Bewegungseinrichtung dienenden motorisch angetriebenen Schlittens **11,** der an einem fest stehenden Portal **10** geführt ist, in Y-Richtung gesteuert verfahrbar. Der Laserschneidkopf 9 ist im gezeigten Beispiel zusätzlich auch in X-Richtung verfahrbar und kann mit Hilfe einer an dem Schlitten 11 angebrachten zusätzlichen Bewegungseinrichtung **12,** beispielsweise in Form eines Linearantriebs, in X-Richtung gesteuert verfahren werden.

Mit Hilfe der aufeinander aufbauenden Bewegungseinrichtungen 11, 12 kann der Laserschneidkopf 9 sowohl in X-Richtung als auch in Y-Richtung an einer gewünschten Schneidkopfposition Xs, Y_{S} innerhalb des Spalts 6 positioniert werden. Zusätzlich kann der Laserschneidkopf 9 im gezeigten Beispiel mittels einer dritten Bewegungseinrichtung **13,** beispielsweise in Form eines Linearantriebs, die auf die zweite Bewegungseinrichtung 12 aufbaut, entlang einer dritten Bewegungsrichtung Z (Schwerkraftrichtung, im Folgenden: Z-Richtung oder Entnahmerichtung) bewegt werden, um den Abstand zwischen einer Bearbeitungsdüse **9a** des Laserschneidkopfs 9 und der Oberfläche des Werkstücks 2 einzustellen bzw. um den Laserschneidkopf 9 an einer gewünschten Schneidkopfposition Z_{S} in Z-Richtung relativ zur Werkstück-Lagerungsebene E zu positionieren.

Die gesteuerte Bewegung der Maschinenkomponenten erfolgt dabei jeweils sowohl in positive als auch in negative X-, Y- bzw. Z-Richtung.

In dem in Fig. 1 gezeigten Spalt 6 sind zur zusätzlichen Unterstützung des Werkstücks 2 und zur Unterstützung von beim trennenden Bearbeiten geschnittenen Werkstückteilen **20** zwei Unterstützungsschlitten **14a, 14b** angeordnet. Die beiden Unterstützungsschlitten 14a, 14b erstrecken sich jeweils über die gesamte Breite b des Spalts 6 und sind in dem Spalt 6 in positive und negative Y-Richtung gesteuert und unabhängig voneinander verfahrbar. Die gesteuerte Bewegung der Unterstützungsschlitten 14a, 14b zwischen den Seitenkanten der fest stehenden Werkstückauflageflächen 4, 5 kann beispielsweise mit Hilfe von Spindelantrieben erfolgen, wobei die Spindelmutter an dem jeweiligen Unterstützungsschlitten 14a, 14b angebracht ist und die Spindel sowie der Antriebsmotor an einer der beiden fest stehenden Werkstückauflagen 4, 5 angebracht sind. Es versteht sich, dass die gesteuerte Bewegung der Unterstützungsschlitten 14a, 14b auch auf andere Weise realisiert werden kann.

Die Unterstützungsschlitten 14a, 14b können in dem Spalt 6 jeweils an eine gewünschte Position Y_{UA}, Y_{UB} entlang der zweiten Richtung Y bewegt werden, um dort das Werkstück 2 sowie von dem Werkstück 2 freizuschneidende bzw. beim Bearbeiten freigeschnittene Werkstückteile 20 mittels einer an dem jeweiligen Unterstützungsschlitten 14a, 14b angebrachten Auflagefläche **15a, 15b** zu unterstützen. Die Auflagefläche 15a, 15b eines jeweiligen Unterstützungsschlittens 14a, 14b schließt im gezeigten Fall in Z-Richtung bündig mit den Werkstückauflageflächen 4, 5 ab, d.h. die Auflageflächen 15a, 15b der Unterstützungsschlitten 14a, 14b befinden sich in der Lagerungsebene E für das Werkstück 2.

Bei dem in Fig. 1 gezeigten Beispiel ist an den, in X-Richtung verlaufenden, voneinander abgewandten Seitenkanten der Auflageflächen 15a, 15b der Unterstützungsschlitten 14a, 14b jeweils ein Überdeckungselement **24a, 24b** zur Abdeckung des Spalts 6 zwischen den beiden Werkstückauflageflächen 4, 5 angebracht. Die Überdeckungselemente 24a, 24b erstrecken sich über die gesamte Breite b des Spalts 6, werden beim Bewegen der Unterstützungsschlitten 14a, 14b in Y-Richtung mitbewegt und sind im gezeigten Beispiel rolladenförmig ausgebildet.

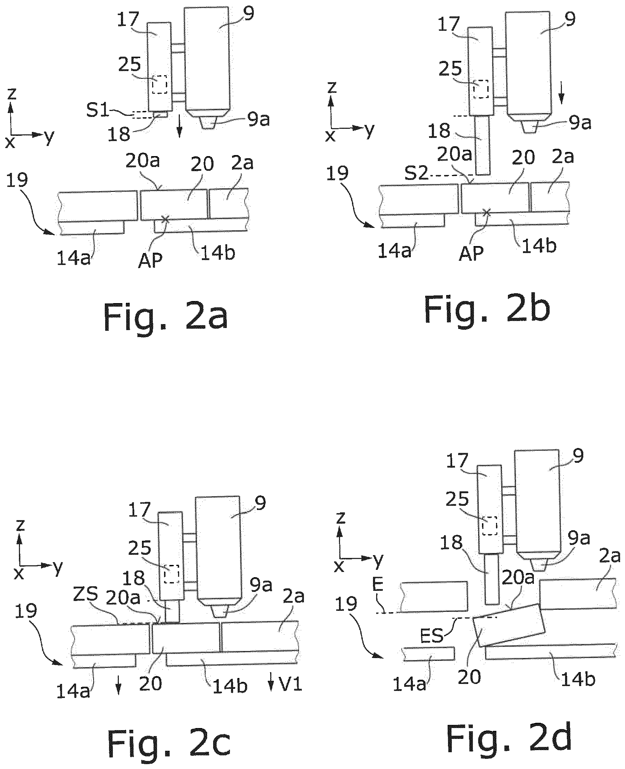

Um Werkstückteile 20, die lange zungenförmige Teilbereiche aufweisen, die sich in X-Richtung oder in Y-Richtung erstrecken, besser zu unterstützen, sind bei dem in **Fig. 2a****-g** gezeigten Beispiel die beiden einander zugewandten, parallel ausgerichteten seitlichen Kanten der Auflageflächen 15a, 15b der beiden Unterstützungsschlitten 14a, 14b schräg, d.h. unter einem Winkel sowohl zur X-Richtung als auch zur Y-Richtung, ausgerichtet.

Zur Steuerung der schneidenden Bearbeitung weist die Vorrichtung 1 eine Steuerungseinrichtung **16,** typischerweise in Form einer CNC-Steuerung auf, die zur Koordinierung der Bewegungen des Werkstücks 2, des Laserschneidkopfs 9 sowie der Unterstützungsschlitten 14a, 14b dient, um eine gewünschte Werkstückposition X_{W}, eine gewünschte Schneidkopfposition X_{S}, Y_{S}, Z_{S} sowie eine gewünschte Position Y_{UA}, Y_{UB} der Unterstützungsschlitten 14a, 14b einzustellen, um das Schneiden einer vorgegebenen Schnittkontur **21** zu ermöglichen und das Werkstück 2 ausreichend zu unterstützen. Die Steuerungseinrichtung 16 kann beispielsweise auf der CNC-Steuerung Siemens SINUMERIK 840D si basieren. Die Steuerungseinrichtung 16 dient im gezeigten Beispiel auch zur Steuerung einer an dem Laserschneidkopf 9 seitlich befestigten Ausdrückeinrichtung **17,** die in Form eines Ausdrückzylinders ausgebildet ist, dessen Kolbenstange als Ausdrückelement **18** zum Ausdrücken von freigetrennten Werkstückteilen 20 bzw. zu deren Entnahme aus der Lagerungsebene E des Werkstücks 2 dient, wie nachfolgend anhand von Fig. 2a-g beschrieben wird. Die beiden Unterstützungsschlitten 14a, 14b bilden hierbei Gegenhalteelemente einer Gegenhalteeinrichtung **19,** welche einen gesteuerten Antrieb aufweist und eine Bewegung der beiden Unterstützungsschlitten 14a, 14b in Entnahmerichtung (Z-Richtung) ermöglicht.

Fig. 2a zeigt ein von einem Rest-Werkstück 2a (Restgitter) mittels des Laserstrahls 3 freigeschnittenes Werkstückteil **20,** das von den beiden Unterstützungsschlitten 14a, 14b unterstützt wird. Nach dem Ausschalten des Laserstrahls 3 wurde der Laserschneidkopf 9 mit Hilfe der zweiten Bewegungseinrichtung 12 in Y-Richtung sowie mit Hilfe der dritten Bewegungseinrichtung 13 in X-Richtung innerhalb des Spalts 6 bewegt, bis die in Fig. 2a dargestellte Stellung erreicht wurde, in der das Ausdrückelement 18 über einer Ausdrückposition AP positioniert ist. Der Laserschneidkopf 9 und somit auch die Ausdrückeinrichtung 17 (nachfolgend auch als Ausdrückzylinder bezeichnet) wurden gleichzeitig mit Hilfe der vierten Bewegungseinrichtung 13 in Z-Richtung nach oben verschoben, um den Abstand von der Oberseite 20a des freigetrennten Werkstückteils 20 bzw. vom Restwerkstück 2a zu vergrößern.

Der Laserschneidkopf 9 wurde hierbei so weit nach oben verfahren, dass das Ausdrückelement 18 aus einer in Fig. 2a gezeigten ersten, zurückgezogenen Stellung S1, in welcher das Ausdrückelement 18 (nachfolgend auch als Kolbenstange bezeichnet) nicht nach unten über den Laserschneidkopf 9, genauer gesagt über die Bearbeitungsdüse 9a, übersteht, in eine in Fig. 2b gezeigte zweite, ausgefahrene Stellung S2, verschoben werden kann, in welcher das Ausdrückelement 18 über die Bearbeitungsdüse 9a übersteht.

Das als Kolbenstange ausgebildete Ausdrückelement 18 des Ausdrückzylinders 17 wird mittels eines Aktors von der ersten, oberen Stellung S1, welche eine obere Endlage bildet, in die zweite, untere Stellung S2 verschoben, welche eine untere Endlage des Ausdrückelements 18 bildet. Bei dem Ausdrückzylinder 17 handelt es sich im gezeigten Beispiel um einen Pneumatikzylinder, dem ein Arbeitsgas zugeführt wird, um die Kolbenstange 18 zu verschieben. Der Ausdrückzylinder 17 kann daher als Gasfeder dienen, d.h. die Kolbenstange 18 kann in der zweiten Stellung S2 gegen eine Federkraft nach oben gedrückt werden, wenn diese auf die Oberseite 20a des freigetrennten Werkstückteils 20 aufgesetzt wird und gegen dieses andrückt. Alternativ kann als Aktuator ein motorischer Antrieb dienen, der beispielsweise über eine Welle eine Verschiebung des Ausdrückelements 18 bewirkt. In diesem Fall wird das Ausdrückelement 18 typischer Weise in der zweiten Stellung S2 arretiert bzw. zugestellt, so dass dieses aus der zweiten Stellung S2 nicht nach oben, d.h. in Richtung auf die erste Stellung S1, verschoben werden kann.

Im gezeigten Beispiel wird der Bearbeitungskopf 9 nach unten verschoben, bis die Kolbenstange 18 des Ausdrückzylinders 17 gegen die Oberseite 20a des freigetrennten Werkstückteils 20 drückt. Hierbei wird die Kolbenstange 18 aus der in Fig. 2b gezeigten zweiten Stellung S2 in eine in Fig. 2c gezeigte Zwischenstellung ZS zurückgedrückt, die gegenüber der zweiten Stellung S2 in Richtung auf die erste Stellung S1 verschoben ist. Durch den Druck, den die Kolbenstange 18 in der Zwischenstellung ZS auf das freigetrennte Werkstückteil 20 ausübt, wird dieses aus dem (Rest-)Werkstück 2 ausgedrückt, wenn die beiden Unterstützungsschlitten 14a, 14b aus der Werkstück-Auflageebene E nach unten abgesenkt werden, wie dies in Fig. 2d dargestellt ist.

Die Zwischenstellung ZS ist so gewählt, dass beim synchronen Absenken der beiden Unterstützungsschlitten 14a, 14b unter die Werkstück-Auflageebene E die Kolbenstange 18 so weit ausgefahren werden kann, dass diese auch bei der in Fig. 2d gezeigten unteren Endstellung der Unterstützungsschlitten 14a, 14b noch gegen die Oberseite 20a des freigetrennten Werkstückteils 20 drückt und dieses in seiner horizontalen Lage fixiert. Alternativ oder ergänzend kann beim Absenken der Unterstützungsschlitten 14a, 14b der Bearbeitungskopf 9 (insbesondere synchron) um eine bestimmte Weglänge mit abgesenkt werden, um die Vorspannung der in der Zwischenstellung ZS befindlichen Kolbenstange 18 gegen das Werkstückteil 20 aufrecht zu erhalten, so dass dieses bei der Bewegung in Z-Richtung, welche eine Entnahmerichtung bildet, zwischen der als Ausdrückelement dienenden Kolbenstange 18 und dem/den als Gegenhalteelement(e) dienenden Unterstützungsschlitten 14a, 14b geklemmt ist.

Die Unterstützungsschlitten 14a, 14b werden abgesenkt, bis diese ihre in Fig. 2d gezeigte untere Endstellung erreicht haben. Bei dem in Fig. 2d gezeigten Beispiel wird hierbei eine untere Endstellung ES der Kolbenstange 18 nicht erreicht, d.h. die Entnahme des Werkstückteils 20 war nicht erfolgreich: Das Werkstückteil 20 hat sich im Restwerkstück 2a verhakt und liegt daher nicht auf den in deren unterer Endstellung befindlichen Unterstützungsschlitten 14a, 14b auf. Um zu prüfen, ob das freigetrennte Werkstückteil 20 vollständig aus dem Rest-Werkstück 2a ausgedrückt wurde, weist der Ausdrückzylinder 17 eine Sensoreinrichtung **25** auf, die beispielsweise als Wegsensor ausgebildet sein kann und welche die Position bzw. die Stellung des Ausdrückelements 18 relativ zum unteren Ende des Ausdrückzylinders 17 bestimmt.

Die untere Endstellung ES des Ausdrückelements 18 kann gegenüber der zweiten Stellung S2 in Richtung auf das untere Ende des Ausdrückzylinders 17 zurückgezogen sein oder mit dieser übereinstimmen, je nachdem, ob das Ausdrückelement 18 in der zweiten Stellung S2 zustellbar oder federnd gelagert ist. Die Prüfung, ob die Endstellung ES des Ausdrückelements 18 erreicht wurde, kann auf unterschiedliche Art und Weise sowie ggf. mit unterschiedlichen Sensoreinrichtungen erfolgen. Für Details hinsichtlich der Prüfung, ob die Endstellung ES erreicht ist, sei auf die eingangs zitierte DE102016208872A1 verwiesen.

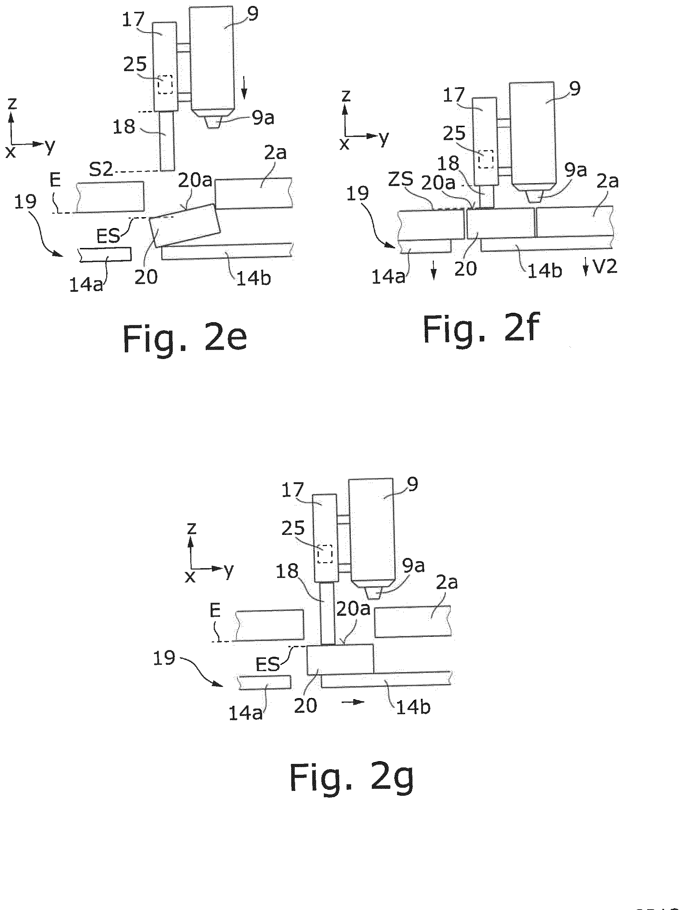

Für den in Fig. 2d gezeigten Fall, dass die Prüfung ergibt, dass die Entnahme nicht erfolgreich war, d.h. dass das Werkstückteil 20 am Restwerkstück 2a verhakt und daher nicht vollständig vom Restwerkstück 2a getrennt wurde, wird eine Wiederholstrategie (Retry-Strategie) angewandt, die nachfolgend in Zusammenhang mit Fig. 2e-g beschrieben wird:
Wie in Fig. 2e zu erkennen ist, wird in einem ersten Schritt die Klemmung des Werkstückteils 20 zwischen der als Ausdrückelement dienenden Kolbenstange 18 und dem als Gegenhalteelement dienenden Unterstützungsschlitten 14b vollständig aufgehoben, indem die Kolbenstange 18 durch eine Bewegung des Schneidkopfs 9 nach oben, d.h. in positiver Z-Richtung, verfahren wird. Alternativ kann die Klemmung des Werkstückteils 20 (zunächst) nur verringert werden, indem die durch die Kolbenstange 18 auf das Werkstückteil 20 aufgebrachte Kraft beispielsweise durch Drucksteuerung über ein Proportionalventil verringert wird. Auf diese Weise können Spannungen in dem Werkstückteil 20 abgebaut werden. Nachfolgend werden die beiden Unterstützungsschlitten 14a, 14b angehoben, um das Werkstückteil 20 erneut in die Lagerungsebene E des Werkstücks 2 bzw. des Restwerkstücks 2a zu verbringen.

In einem weiteren Schritt wird die Klemmung des Werkstückteils 20 wiederhergestellt, indem der Anpressdruck des Ausdrückelements 18 wieder erhöht oder das Ausdrückelement 18 auf die Oberseite 20a des Werkstückteils 20 abgesenkt wird, wie dies in Fig. 2f dargestellt ist. Die in Fig. 2f gezeigte Ausgangsposition entspricht der in Fig. 2c gezeigten Ausgangsposition beim ersten Entnahmeversuch. Aus der in Fig. 2f gezeigten Ausgangsposition wird erneut versucht, das Werkstückteil 20 aus dem Restwerkstück 2a zu entnehmen.

Zu diesem Zweck wird das zwischen dem Ausdrückelement 18 und dem Gegenhalteelement 14b geklemmte Werkstückteil 20 erneut nach unten, d.h. entlang der Entnahmerichtung Z, abgesenkt. Das Absenken des Werkstückteils 20 erfolgt bei dem wiederholten Entnahmeversuch mit einer Geschwindigkeit v₂, die sich von der Geschwindigkeit v₁ beim ersten Entnahmeversuch unterscheidet. Im gezeigten Beispiel wird das Werkstückteil 20 bei dem erneuten Entnahmeversuch langsamer, d.h. mit einer kleineren Geschwindigkeit v₂ abgesenkt als beim ersten Entnahmeversuch (v₂ < v₁). Es versteht sich aber, dass auch der umgekehrte Fall möglich ist, d.h. dass die Geschwindigkeit v₂ beim zweiten Entnahmeversuch größer gewählt werden kann als die Geschwindigkeit v₁ beim ersten Entnahmeversuch.

Beim zweiten Entnahmeversuch wird die untere Endlage ES des Ausdrückelements 18 erreicht, wie dies in Fig. 2g dargestellt ist, d.h. das Werkstückteil 20 wird vollständig vom Restwerkstück 2a gelöst und liegt auf dem als Gegenhalteelement dienenden Unterstützungsschlitten 14b auf. Sobald in diesem Fall die Unterstützungsschlitten 14a, 14b ihre untere Endstellung erreicht haben, kann die Kolbenstange 18 aus ihrer unteren Endstellung ES in die in Fig. 2a gezeigte erste Stellung S1 zurück bewegt werden. Zum Ausschleusen kann das freigetrennte Werkstückteil 20 beispielsweise unter der Werkstück-Lagerungsebene E in dem Spalt 6 bewegt werden, indem der zweite Unterstützungsschlitten 14b in Y-Richtung verschoben wird, bis eine (nicht gezeigte) Ausschleusposition erreicht ist, in der das freigetrennte Werkstückteil 20 nach unten ausgeschleust wird.

Für den Fall, dass anders als weiter oben beschrieben ist der zweite Entnahmeversuch nicht erfolgreich war, kann die weiter oben in Zusammenhang mit Fig. 2e und Fig. 2f beschriebene Wiederholstrategie, bei der die Klemmung des Werkstückteils 20 verringert oder vollständig aufgehoben und anschließend wiederhergestellt wird, mindestens ein weiteres Mal wiederholt werden, bis die Entnahme erfolgreich war oder bis eine vorgegebene Anzahl von Wiederholungen erreicht ist. War kein Entnahmeversuch erfolgreich, wird nach dem Erreichen der vorgegebenen Anzahl von Versuchen (Retrys) die Bearbeitung des Werkstücks 2 gestoppt und eine Fehlermeldung ausgegeben.

Liegt das Werkstückteil 20 auf beiden als Gegenhalteelementen dienenden Unterstützungsschlitten 14a, 14b auf, so kann in einem ergänzenden Verfahrensschritt nach Verringern oder vollständigem Aufheben der Klemmung durch das Ausdrückelement 18 eine gegenläufige Verfahrbewegung der Unterstützungsschlitten 14a, 14b um wenige Millimeter entlang der Entnahmerichtung, d.h. kurze Auf- und Abbewegungen der Unterstützungsschlitten 14a,14b in Z-Richtung, erfolgen. Durch die gegenläufige Bewegung der Unterstützungsschlitten 14a, 14b kann das Werkstückteil 20 vom Restwerkstück 2a "freigerüttelt" werden. Die gegenläufige Bewegung kann hierbei gleichzeitig oder zeitlich versetzt erfolgen oder in der Form, dass nur einer der das Werkstückteil 20 stützenden Schlitten 14b die Verfahrbewegung ausführt, während der andere Schlitten 14a sich nicht bewegt.

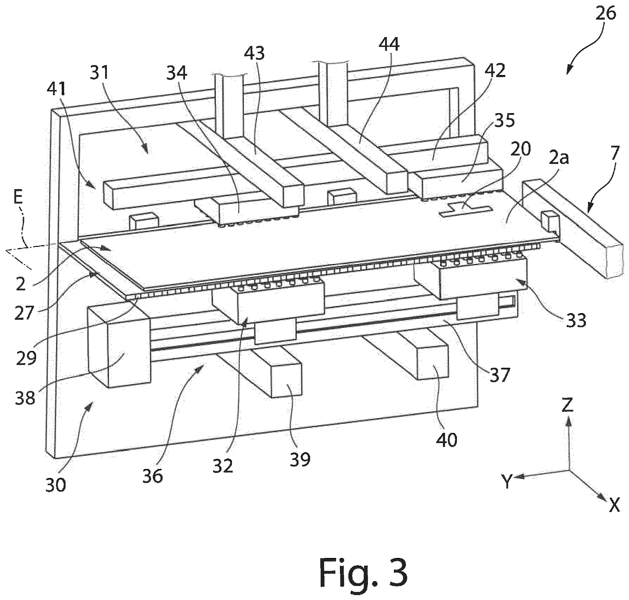

Die prozesssichere Entnahme bzw. das Ausschleusen von Werkstückteilen 20 über den Spalt 6 ist nur möglich, wenn die Werkstückteile 20 keine zu großen Abmessungen aufweisen, d.h. in der Regel keine Breite aufweisen, die größer ist als die Breite b des Spalts 6. Für die Entnahme von größeren Werkstückteilen 20 kann eine Vorrichtung **26** zur Entnahme verwendet werden, die in X-Richtung benachbart zum Portal 10 angeordnet ist und sich über und unter der Werkstückauflagefläche 5 erstreckt und die nachfolgend im Zusammenhang mit **Fig. 3** beschrieben wird. Nach dem Freischneiden eines Werkstückteils 20 vom Werkstück 2 mittels des in Fig. 1 gezeigten Laserschneidkopfs 9 wird das beim trennenden Bearbeiten gebildete Restwerkstück 2a gemeinsam mit dem freigeschnittenen Werkstückteil 20 mit Hilfe der Halte- und Bewegungseinrichtung 7 in X-Richtung bewegt, bis beide eine in Fig. 3 dargestellte Entladeposition erreicht haben. Mittels der Vorrichtung 26 soll das Werkstückteil 20 aus dem Restwerkstück 2a entnommen werden, bevor das Werkstückteil 20 aus dem Nahbereich der Bearbeitungsmaschine 1 abtransportiert werden kann. Das Restwerkstück 2a verbleibt hierbei auf der Werkstückauflagefläche 5 (vgl. Fig. 1), ehe es nach der Entnahme sämtlicher Werkstückteile ebenfalls aus dem Nahbereich der Bearbeitungsmaschine 1 abgeführt wird.

Als Werkstücklagerung für das Restwerkstück 2a und das Werkstückteil 20 dient die plattenartige Werkstückauflage **27,** an deren Oberseite die Werkstückauflagefläche 5 gebildet ist. Die Auflagestellen des bearbeiteten Werkstücks 2 auf den Borsten oder den Rollen der Werkstückauflage 27 definieren die in Fig. 3 angedeutete Lagerungsebene E der Werkstückauflage 27, entlang derer das Werkstückteil 20 und das Restwerkstück 2a miteinander fluchten.

Wie aus Fig. 3 hervorgeht, ist die Werkstückauflage 27 der Bearbeitungsmaschine 1 in dem dargestellten Beispielsfall als Lochplatte mit einer Vielzahl von Durchtrittsöffnungen **29** ausgebildet. Unterhalb der Werkstückauflage 27 ist eine Ausdrückvorrichtung **30,** oberhalb der Werkstückauflage 27 eine Gegenhaltevorrichtung **31** angeordnet. Die Ausdrückvorrichtung 30 umfasst zwei baugleiche Ausdrückeinrichtungen **32, 33,** die Gegenhaltevorrichtung 31 umfasst zwei baugleiche Gegenhalteeinrichtungen **34, 35.**

Die Ausdrückeinrichtungen 32, 33 sind mittels einer Ausdrück-Bewegungseinheit **36** parallel zu der Lagerungsebene E an jede beliebige Stelle unterhalb der Werkstückauflage 27 zustellbar. Zu diesem Zweck weist die Ausdrück-Bewegungseinheit 36 eine Längsschiene **37** auf, entlang derer die Ausdrückeinrichtungen 32, 33 motorisch angetrieben verfahren können. Ein Antriebsmotor **38** der Ausdrückeinrichtungen 32, 33 ist in Fig. 3 zu erkennen. Gemeinsam mit den Ausdrückeinrichtungen 32, 33 ist die Längsschiene 37 an zwei senkrecht zu der Längsschiene 37 verlaufenden Querschienen **39, 40** der Ausdrück-Bewegungseinheit 36 verfahrbar. Die Querschienen 39, 40 können gemeinsam mit der Längsschiene 37 und den von dieser geführten Ausdrückeinrichtungen 32, 33 senkrecht zu der Werkstückauflage 27 bzw. der Lagerungsebene E (in Entnahmerichtung Z) angehoben und abgesenkt werden.

Auf entsprechende Art und Weise können die Gegenhalteeinrichtungen 34, 35 der Gegenhaltevorrichtung 31 parallel zu der Lagerungsebene E jede beliebige Stelle an dem bearbeiteten Werkstück 2 anfahren und senkrecht zu der Lagerungsebene E angehoben und abgesenkt werden. Eine Gegenhalte-Bewegungseinheit **41** umfasst eine Längsschiene **42,** längs derer die Gegenhalteeinrichtungen 34, 35 motorisch angetrieben zugestellt werden können. Gemeinsam mit den Gegenhalteeinrichtungen 34, 35 ist die Längsschiene 42 motorisch angetrieben entlang zweier Querschienen **43, 44** verfahrbar, die ihrerseits senkrecht zu der Längsschiene 42 verlaufen und die zusammen mit der Längsschiene 42 und den daran geführten Gegenhalteeinrichtungen 34, 35 in vertikaler Richtung (Z-Richtung) angehoben und abgesenkt werden können.

Alle wesentlichen Funktionen der Maschine 1 und somit insbesondere auch alle wesentlichen Funktionen der Vorrichtung 26 werden mittels der in Fig. 1 gezeigten Steuerungseinheit 16 numerisch gesteuert, die beispielsweise auf der CNC-Steuerung Siemens SINUMERIK 840D si basieren kann.

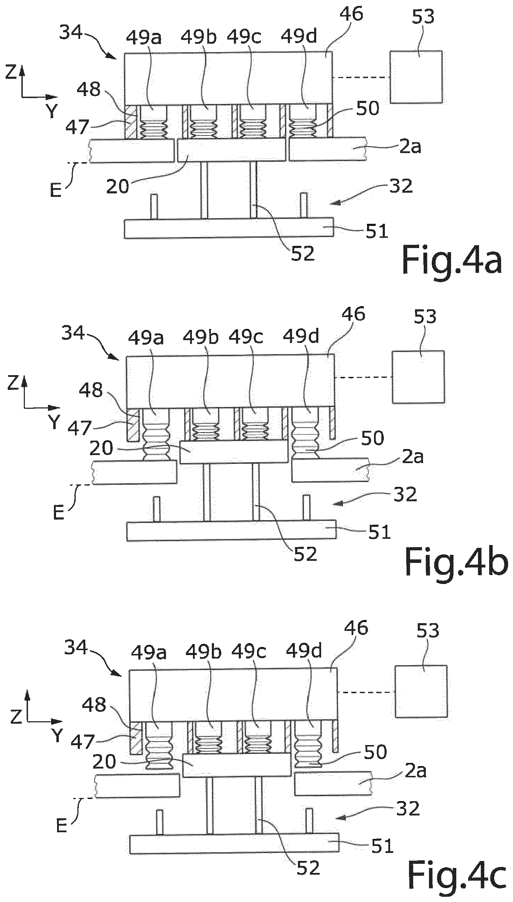

Wie in **Fig. 4a****-e** zu erkennen ist, welche jeweils die erste Gegenhalteeinrichtung 34 von Fig. 3 und die mit dieser zusammenwirkende erste Ausdrückeinrichtung 32 zeigen, weist die Gegenhalteeinrichtung 34 ein kastenartiges Gehäuse **46** mit einer als Stützkörper bzw. als Gegenhalteelement dienenden planen Anlageplatte **47** auf, die mit einer Vielzahl von Bohrungen **48** versehen ist. Die Bohrungen 48 nehmen Gegenhalteelemente in Form von Sauggreifern **49a-d** auf, die als Passivsauger ausgebildet sein können und senkrecht zur Anlageplatte 47 elastisch verformbare Saugermanschetten **50** aufweisen. In Fig. 4a liegen zwei Saugermanschetten 50 des zweiten und dritten Sauggreifers 49b, 49c am Werkstückteil 20 an, während der erste und der vierte Sauggreifer 49a, 49d am Restwerkstück 2a anliegen.

Die in Fig. 4a-e gezeigte erste der beiden baugleichen Ausdrückeinrichtungen 32, 33 besitzt ein Ausdrückgehäuse **51,** an welchem die Ausdrückeinrichtungen 32, 33 an die Längsschiene 37 der Ausdrück-Bewegungseinheit 36 angebunden sind. Im Innern des Ausdrückgehäuses 51 ist eine Mehrzahl herkömmlicher und in den Abbildungen nicht im Einzelnen gezeigter pneumatischer Kolben-Zylinder-Einheiten mit jeweils einem doppelt wirkenden Zylinder untergebracht. Mit jedem der Kolben verbunden ist ein Ausdrückelement in Form eines Ausdrückstifts **52.**

Die Kolben-Zylinder-Einheiten im Inneren des Ausdrückgehäuses 51 sind getrennt ansteuerbar und können unabhängig voneinander mit einer nicht im Einzelnen gezeigten Druckquelle verbunden werden. Durch Betätigen der Kolben-Zylinder-Einheiten werden die Ausdrückstifte 52 in vertikaler Richtung aus dem Ausdrückgehäuse 51 ausgefahren oder in das Ausdrückgehäuse 51 zurückbewegt. Der Querschnitt der Ausdrückstifte 52 darf maximal dem Querschnitt der Durchtrittsöffnungen 29 an der Werkstückauflage 27 (vgl. Fig. 3) entsprechen. In dem dargestellten Beispielsfall ist der Querschnitt der Ausdrückstifte 52 kleiner als der Querschnitt der Durchtrittsöffnungen 29.

Nachfolgend wird der Entnahmevorgang des Werkstückteils 20 aus dem Restwerkstück 2a beschrieben, wobei vorausgesetzt wird, dass das Werkstückteil 20, die Ausdrückeinrichtung 32 und die Gegenhalteeinrichtung 34 an einer für die Entnahme geeignete Entnahmeposition in der XY-Ebene positioniert sind, wie dies in Fig. 4a-e dargestellt ist.

Beim Entnahmevorgang ist der Unterdruckerzeuger für die Gegenhalteeinrichtung 34 zunächst ausgeschaltet, die Sauggreifer 49a-d an der Gegenhalteeinrichtung 34 sind vom Werkstückteil 20 und auch vom Restwerkstück 2a beabstandet. Die Sauggreifer 49 befinden sich folglich in einem Außerfunktionszustand, die Gegenhalteeinrichtung 34 damit in einem Freigabezustand. Mit diesem Funktionszustand wird die Gegenhalteeinrichtung 34 durch eine entsprechende Vertikalbewegung der Gegenhalte-Bewegungseinheit 41 abgesenkt und dadurch auf das bearbeitete Werkstück 2 bzw. auf das Werkstückteil 20 und das Restwerkstück 2a aufgesetzt. Dabei werden die Saugermanschetten 50 der Sauggreifer 49a-d komprimiert und infolgedessen stärker gefaltet und in das Innere der Bohrungen 48 an der Anlageplatte 47 der Gegenhalteeinrichtung 34 zurückgedrängt, bis schließlich die Anlageplatte 47 der Gegenhalteeinrichtung 34 auf der Oberfläche des Werkstückteils 20 bzw. des Restwerkstücks 2a aufsetzt.

Anschließend werden an der Ausdrückeinrichtung 32 diejenigen Ausdrückstifte 52 betätigt, die unterhalb des Werkstückteils 20 liegen und für welche das Werkstückteil 20 über Durchtrittsöffnungen 29 der Werkstückauflage 27 zugänglich ist. Die übrigen Ausdrückstifte 52 der Ausdrückeinrichtung 32 behalten ihre Ausgangslage bei. Mit den aus dem Ausdrückgehäuse 51 ausgefahrenen Ausdrückstiften 52 wird die Ausdrückeinrichtung 32 durch eine entsprechende Hubbewegung der Ausdrück-Bewegungseinheit 36 in die Position gemäß Fig. 4a angehoben. Dabei werden die ausgefahrenen Ausdrückstifte 52 an die Unterseite des Werkstückteils 20 angelegt. Das Werkstückteil 20 wird nun an seiner Unterseite durch die Ausdrückeinrichtung 32 in einer Entnahmerichtung Z beaufschlagt und an seiner Oberseite durch die Gegenhalteeinrichtung 34, genauer gesagt durch die als Gegenhalteelement wirkende Anlageplatte 47, großflächig in der Entnahmerichtung Z abgestützt. Die nach wie vor im Außerfunktionszustand befindlichen Sauggreifer 49 der Gegenhalteeinrichtung 34 liegen an der Oberseite des parallel zur Werkstückebene E ausgerichteten Werkstückteils 20 mit einer aus ihrer elastischen Verformung resultierenden Vorspannung an.

Ein Steuersignal bewirkt, dass die Ausdrückeinrichtung 32 und die Gegenhalteeinrichtung 34 mittels der Ausdrück-Bewegungseinheit 36 und der Gegenhalteeinrichtungs-Bewegungseinheit 41 synchron mit einer Entnahmebewegung in der Entnahmerichtung Z bewegt werden. Dabei wird das zunächst in der Lagerungsebene E des Restwerkstücks 2a angeordnete Werkstückteil 20 aus dem Restwerkstück 2a ausgehoben, wobei dieses zwischen den Ausdrückstiften 52 und den als Gegenhalteelementen dienenden Sauggreifern 49a-d bzw. der ebenfalls als Gegenhalteelement dienenden Anlageplatte 47 der Gegenhalteeinrichtung 34 geklemmt ist. Auch das Restwerkstück 2a wird während der Entnahmebewegung des Werkstückteils 20 mit Hilfe der beiden weiteren Sauggreifer 49a,d von oben gegen die Werkstückauflage 27 angedrückt. Ergänzend kann die zweite Gegenhalteeinrichtung 35 als Niederhalter benachbart zur Gegenhalteeinrichtung 34 in der XY-Ebene positioniert und auf das Restwerkstück 2a abgesenkt werden, so dass das Restwerkstück 2a zwischen der Werkstückauflage 27 und der als weiteres Gegenhalteelement dienenden Anlageplatte der zweiten Gegenhalteeinrichtung 35 geklemmt wird.

Die Vorrichtung 26 weist eine Sensoreinrichtung **53** auf, die es ermöglicht zu prüfen, ob das Werkstückteil 20 vollständig vom Restwerkstück 2a getrennt wurde oder ob noch eine elektrisch leitende Verbindung zwischen dem Werkstückteil 20 und dem Restwerkstück 2a besteht, nachdem dieses mit der oben beschriebenen Hubbewegung aus dem Restwerkstück 2a ausgehoben wurde. Die Sensoreinrichtung 53 kann zu diesem Zweck beispielsweise wie in der weiter oben zitierten DE102017205095B3 dargestellt ausgebildet sein. Erkennt die Sensoreinrichtung 53, dass das Werkstückteil 20 vollständig vom Restwerkstück 2a getrennt wurde, kann der Unterdruckerzeuger der Gegenhalteeinrichtung 34 aktiviert werden, um diese aus dem Freigabezustand in einen Fixierzustand überzuführen, in dem das Werkstückteil 20 an der Gegenhalteeinrichtung 34, genauer gesagt an den beiden saugenden Sauggreifern 49b,c und der Anlageplatte 47 festgelegt bzw. fixiert ist. Die Sensoreinrichtung 53 ermöglicht es ebenfalls zu prüfen, ob das Werkstückteil 20 tatsächlich an der im Fixierzustand befindlichen Gegenhalteeinrichtung 34 fixiert ist.

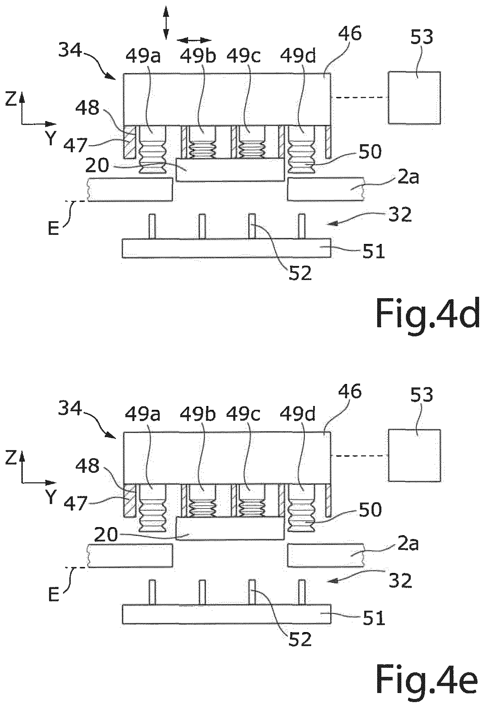

Ist das Werkstückteil 20 an der Gegenhalteeinrichtung 34 fixiert, werden die Ausdrückstifte 52, die zuvor das Werkstückteil 20 beaufschlagt haben, in das Ausdrückgehäuse 51 der Ausdrückeinrichtung 32 zurückgezogen und die Ausdrückeinrichtung 32 wird durch eine entsprechende Absenkbewegung der Ausdrück-Bewegungseinheit 36 abgesenkt, wie dies in Fig. 4e dargestellt ist. Die Gegenhalteeinrichtung 34 verfährt sodann mit dem daran fixierten Werkstückteil 20 mit Hilfe der Gegenhalte-Bewegungseinheit 41 aus dem Nahbereich der Werkstückauflage 27. Um das Werkstückteil 20 an einem Ablageort von der Halteeinrichtung 34 zu lösen, werden die Sauggreifer 49b,c, die das Werkstückteil 20 halten, drucklos geschaltet.

Bei dem in Fig. 4b gezeigten Beispiel war der erste Entnahmeversuch jedoch nicht erfolgreich, d.h. das Werkstückteil 20 hat sich im Restwerkstück 2a verklemmt und steht noch mit diesem in Verbindung, was mit Hilfe der Sensoreinrichtung 53 detektiert wird. Um das Werkstückteil 20 aus dem Restwerkstück 2a zu entnehmen, werden daher die im Folgenden beschriebenen Schritte einer Wiederholstrategie (Retry-Strategie) durchgeführt. Hierbei ist es typischerweise erforderlich, dass nach jedem einzelnen Verfahrensschritt geprüft wird, ob noch ein Kontakt zwischen Werkstückteil 20 und Restwerkstück 2a besteht bzw. ob das Werkstückteil 20 tatsächlich an den beiden Sauggreifern 49a,b fixiert ist oder nicht.

In einem ersten Schritt der Retry-Strategie werden ausweislich von Fig. 4c die beiden das Restwerkstück 2a niederhaltenden Sauggreifer 49a,d vom Restwerkstück 2a gelöst und nach oben verfahren, so dass sich die Spannung des Restwerkstücks 2a abbauen kann. Alternativ oder ergänzend kann die als Niederhalter dienende zweite Gegenhalteeinrichtung 35 vom Restwerkstück 2a nach oben wegbewegt werden, so dass die Klemmung des Restwerkstücks 2a zwischen der Werkstückauflage 27 und der Anlageplatte der zweiten Gegenhalteeinrichtung 35 verringert oder aufgehoben wird. In einer weiteren Alternative kann die durch die zweite Gegenhalteeinrichtung 35 auf das Restgitter wirkende Kraft stufenweise oder kontinuierlich reduziert werden, beispielsweise durch eine Drucksteuerung über ein Proportionalventil, wenn die Verfahrbewegung der zweiten Gegenhalteeinrichtung 35 in Z-Richtung pneumatisch angesteuert ist. Anschließend wird mit Hilfe der Sensoreinrichtung 53 geprüft, ob sich das Werkstückteil 20 aus dem Restwerkstück 2a gelöst hat.

Wenn sich das Werkstückteil 20 nicht aus dem Restwerkstück 2a gelöst hat, werden die beiden niederhaltenden Sauggreifer 49a,d und/oder die Gegenhalteeinrichtung 35 wieder auf dem Restwerkstück 2a positioniert bzw. es wird der Anpressdruck wieder erhöht, um die Spannung wieder aufzubauen. Anschließend erfolgt wieder die sensorische Prüfung mit Hilfe der Sensoreinrichtung 53, ob sich das Werkstückteil 20 vom Restwerkstück 2a gelöst hat.

Hat sich das Werkstückteil 20 nicht aus dem Restwerkstück 2a gelöst, so werden die niederhaltenden Sauggreifer 49a,d und/oder die Gegenhalteeinrichtung 35 erneut vom Restwerkstück 2a gelöst und anschließend die Saugfunktion der Gegenhalteeinrichtung 34 aktiviert, um diese aus dem Freigabezustand in den Fixierzustand zu überführen. Wie in Fig. 4d dargestellt ist, werden die Ausdrückstifte 52 abgesenkt, um die Klemmung des Werkstückteils 20 vollständig aufzulösen. Alternativ kann der Anpressdruck der pneumatisch betätigten Ausdrückstifte 52 verringert werden. Nachfolgend wird erneut geprüft, ob sich dadurch das Werkstückteil 20 aus dem Restwerkstück 2a gelöst hat.

Wenn das Werkstückteil 20 nicht vom Restwerkstück 2a gelöst wurde, aber Kontakt zu den Sauggreifern 49b,c hat, werden die Ausdrückstifte 52 noch einmal gegen das Werkstückteil 20 und die beiden als Niederhalter dienenden weiteren Sauggreifer 49a,d bzw. die Anlageplatte der zweiten Gegenhalteeinrichtung 35 gegen das Restwerkstück 2a gespannt und die Klemmung anschließend wieder verringert oder gelöst. Es wird erneut geprüft, ob sich durch dieses Auf- und Abbauen der Spannung das Werkstückteil 20 aus dem Restgitter 2a gelöst hat.

Wenn dies nicht erfolgreich war, so wird bei einem dünnen, flexiblen Werkstückteil 20 (<3 mm Materialdicke), das nicht vom Restwerkstück gelöst werden konnte aber durch Vakuum an den Sauggreifern 49b,c gehalten ist, das Werkstückteil 20 durch kleine, horizontale Bewegungen der Gegenhalteeinrichtung 34 relativ zum Restwerkstück 2a bewegt, um Verspannungen oder Verhakungen zu lösen, wie in Fig. 4d durch einen horizontalen Doppelpfeil angedeutet ist. Bei dieser Hin- und Herbewegung dürfen die Ausdrückstifte 52 keinen Kontakt zur Werkstückunterseite haben.

Wenn das dünne, flexible Werkstückteil 20 auch durch die Hin- und Herbewegung nicht aus dem Restwerkstück 2a gelöst werden konnte, aber noch Kontakt zu den Sauggreifern 49b,c hat, werden die horizontalen Bewegungen des Werkstückteils 20 mit oszillierenden Bewegungen der Sauggreifer 49a,b bzw. der Gegenhalteeinrichtung 34 entlang der Entnahmerichtung Z überlagert.

Wenn alle vorausgegangenen Verfahrensschritte nicht erfolgreich waren, so wird das Werkstückteil 20 durch Absenken der Gegenhalteeinrichtung 20 und somit der Sauggreifer 49b,c wieder auf der Werkstückauflage 27 in der Lagerungsebene E positioniert und das Vakuum abgeschaltet. Anschließend werden die als Niederhalter dienenden Sauggreifer 49a,d bzw. die Anlageplatte der zweiten Gegenhalteeinrichtung 35 und die Ausdrückstifte 52 wieder gegen das Restwerkstück 2a bzw. das Werkstückteil 20 vorgespannt. Die Gegenhalteeinrichtung 47 und die Ausdrückstifte 52 werden gemeinsam mit einer gegenüber der Geschwindigkeit v₁ beim ersten Entnahmeversuch reduzierten Geschwindigkeit v₂ in Entnahmerichtung Z bewegt. Vor und ggf. nach dem Einschalten des Vakuums wird mit der Sensoreinrichtung 53 wieder geprüft, ob das Werkstückteil 20 aus dem Restgitter 2a gelöst werden konnte.

Wenn dieser Entnahmeversuch ebenfalls nicht erfolgreich ist, wird das Werkstückteil 20 wieder abgesenkt und die Entnahmekomponenten 47, 49a-d, 52 werden vom Werkstückteil 20 bzw. vom Restwerkstück 2a gelöst bzw. der Anpressdruck wird verringert, um die Klemmung zu verringern oder vollständig aufzuheben. Anschließend wird die Spannung bzw. die Klemmung wieder aufgebaut und das geklemmte Werkstückteil 20, die Gegenhalteeinrichtung 34 sowie die Ausdrückstifte 52 werden mit gegenüber dem ersten Entnahmeversuch erhöhter Geschwindigkeit v₂ ruckartig nach oben bewegt.

Wenn auch der letzte Verfahrensschritt des oben beschriebenen Retry-Verfahrens nicht erfolgreich ist, wird die Bearbeitung gestoppt und eine Fehlermeldung ausgegeben. Einzelne oder alle Verfahrensschritte können außerdem mehrfach wiederholt werden, bis eine jeweils vorgegebene Zahl an Wiederholungen erreicht ist.

Sowohl für den Fall, dass das Entnahmeergebnis positiv ist, d.h. ein jeweiliger Entnahmeversuch erfolgreich war, als auch wenn dies nicht der Fall war, können die bei dem jeweiligen Entnahmeversuch verwendeten Betriebs-Parameter des mindestens einen Ausdrückelements 18, 52 und/oder des mindestens einen Gegenhalteelements 14a,b, 49b,c, 47 in Form eines Betriebs-Parametersatzes gemeinsam mit Geometrie-Parametern (Geometrie der Randkontur, Länge, Breite, Dicke etc.) des zu entnehmenden Werkstückteils 20 in einem Ergebnisspeicher **54** gespeichert werden (vgl. Fig. 1). Der Ergebnisspeicher 54 ist im gezeigten Beispiel Cloud-basiert, kann aber auch auf einem zentralen Computer/Server der Fabrik, in der sich die Maschine 1 befindet, oder in der Maschine 1, beispielsweise in der Steuerungseinrichtung 16, vorgesehen sein.

Für das Festlegen einer geeigneten Retry-Strategie kann die Steuerungseinrichtung 16 den Ergebnisspeicher 54 auslesen, um anhand der Geometrie-Parameter des zu entnehmenden Werkstückteils 20 eine optimierte Abfolge von Entnahmeversuchen mit jeweils geeigneten Betriebs-Parametern bzw. einem jeweils zugehörigen Betriebs-Parametersatz festzulegen. Für den Fall, dass in dem Ergebnisspeicher 54 auch Entnahmeversuche mit negativem Ausgang bzw. Entnahmeergebnisse gespeichert werden, kann anhand der Geometrie-Parameter eines jeweiligen zu entnehmenden Werkstückteils 20 die Erfolgswahrscheinlichkeit bei der Entnahme bestimmt und erforderlichenfalls bei der Erstellung eines Steuerungsprogramms der Laserbearbeitungsmaschine 1 eine Warnung an einen Bediener bzw. Programmierer ausgegeben werden, wenn eine erfolgreiche Entnahme des entsprechenden Werkstückteils 20 nicht zu erwarten ist.

## Patentansprüche

1. Verfahren zum Entnehmen eines Werkstückteils (20) aus einem in einer Lagerungsebene (E) gelagerten Restwerkstück (2a), umfassend:
Bewegen des Werkstückteils (20), das zwischen mindestens einem Ausdrückelement (18, 52) einer Ausdrückeinrichtung (17, 32) und mindestens einem Gegenhalteelement (14a,b, 49b,c, 47) einer Gegenhalteeinrichtung (19, 34) geklemmt ist, entlang einer Entnahmerichtung (Z), sowie Prüfen, ob das Werkstückteil (20) beim Bewegen entlang der Entnahmerichtung (Z) vollständig vom Restwerkstück (2a) getrennt wurde,
**gekennzeichnet durch**
Verringern oder vollständiges Aufheben der Klemmung des Werkstückteils (20) und anschließendes Wiederherstellen der Klemmung des Werkstückteils (20), wenn beim Prüfen festgestellt wird, dass das Werkstückteil (20) nicht vollständig vom Restwerkstück (2a) getrennt wurde.

2. Verfahren nach Anspruch 1, bei dem der Schritt des Verringerns oder des vollständigen Aufhebens der Klemmung des Werkstückteils (20) und des Wiederherstellens der Klemmung des Werkstückteils (20) mehrfach durchgeführt wird.

3. Verfahren nach Anspruch 1 oder 2, bei dem beim Aufheben der Klemmung zunächst der Kontakt zwischen dem Ausdrückelement (18, 52) und dem Werkstückteil (20) aufgehoben wird.

4. Verfahren nach einem der vorhergehenden Ansprüche, weiter umfassend:
Klemmen des Restwerkstücks (2a) zwischen einer Werkstückauflage (27) zur Lagerung des Restwerkstücks (2a) in der Lagerungsebene (E) und mindestens einem weiteren Gegenhalteelement (49a,d, 47) beim Bewegen des Werkstückteils (20) entlang der Entnahmerichtung (Z), wobei bevorzugt vor dem Verringern oder dem vollständigen Aufheben der Klemmung des Werkstückteils (20) die Klemmung des Restwerkstücks (2a) verringert oder vollständig aufgehoben wird.

5. Verfahren nach einem der vorhergehenden Ansprüche, bei dem beim Verringern oder Lösen der Klemmung das Werkstückteil (20) an dem mindestens einen Gegenhalteelement (49b,c, 47) der in einem Fixierzustand befindlichen Gegenhalteeinrichtung (34) fixiert ist.

6. Verfahren nach einem der vorhergehenden Ansprüche, bei dem die Gegenhalteeinrichtung (34) bei aufgehobener Klemmung das Werkstückteil (20) in mindestens einer Richtung (X, Y) senkrecht zur Entnahmerichtung (Z) relativ zum Restwerkstück (2a) und bevorzugt zusätzlich entlang der Entnahmerichtung (Z) relativ zum Restwerkstück (2a) bewegt.

7. Verfahren nach einem der vorhergehenden Ansprüche, bei dem das Werkstückteil (20) mittels mehrerer Gegenhalteelemente (14a,b) der Gegenhalteeinrichtung (19) geklemmt wird, die gegenläufig entlang der Entnahmerichtung (Z) bewegt werden, um das Werkstückteil (20) vom Restwerkstück (2a) zu trennen.

8. Verfahren nach einem der vorhergehenden Ansprüche, bei dem beim Bewegen des Werkstückteils (20) entlang der Entnahmerichtung (Z) mindestens eine das Werkstückteil (20) stützende Auflagefläche (15a, 15b) des Gegenhalteelements (14a, 14b) unter die Lagerungsebene (E) des Restwerkstücks (2a) abgesenkt wird und während des Absenkens das Ausdrückelement (18) von oben gegen das Werkstückteil (20) drückt.

9. Verfahren nach einem der vorhergehenden Ansprüche, weiter umfassend:
Bewegen des Werkstückteils (20) bei verringerter oder vollständig aufgehobener Klemmung entlang der Entnahmerichtung (Z) in die Lagerungsebene (E) des Restwerkstücks (2a), Wiederherstellen der Klemmung des Werkstückteils (20) zwischen mindestens einem Ausdrückelement (18, 52) der Ausdrückeinrichtung (17, 32) und mindestens einem Gegenhalteelement (14a,b, 49b,c, 47) der Gegenhalteeinrichtung (19, 34), sowie
erneutes Bewegen des Werkstückteils (20) entlang der Entnahmerichtung (Z) bevorzugt mit einer Geschwindigkeit (v2), die sich von der Geschwindigkeit (v1) beim Bewegen des Werkstückteils (20) entlang der Entnahmerichtung (Z) unterscheidet.

10. Verfahren nach einem der vorhergehenden Ansprüche, weiter umfassend:
Speichern von Geometrie-Parametern des zu entnehmenden Werkstückteils (20), eines Entnahmeergebnisses und von Betriebs-Parametersätzen des mindestens einen Ausdrückelements (18, 52) und/oder des mindestens einen Gegenhalteelements (14a,b, 47, 49b,c) beim Verringern oder vollständigen Aufheben und anschließenden Wiederherstellen der Klemmung des Werkstückteils (20) und bevorzugt des Restwerkstücks (2a) und/oder beim erneuten Bewegen des Werkstückteils (20) entlang der Entnahmerichtung (Z) in einem Ergebnisspeicher (54).

11. Verfahren nach Anspruch 10, weiter umfassend: automatisches Erstellen einer Entnahmeprognose für ein zu entnehmendes Werkstückteil (20) anhand von Geometrie-Parametern des zu entnehmenden Werkstückteils (20) und der im Ergebnisspeicher (54) gespeicherten Geometrie-Parameter von entnommenen Werkstückteilen (20) und dem jeweils zugehörigen Entnahmeergebnis.

12. Verfahren nach Anspruch 10 oder 11, weiter umfassend: automatisches Auswählen von in dem Ergebnisspeicher (54) gespeicherten Betriebs-Parametersätzen in Abhängigkeit von Geometrie-Parametern des zu entnehmenden Werkstückteils (20).

13. Vorrichtung (1, 26) zur Entnahme eines Werkstückteils (20) aus einem in einer Lagerungsebene (E) gelagerten Restwerkstück (2a), umfassend:
eine Ausdrückeinrichtung (17, 32), die mindestens ein entlang einer Entnahmerichtung (Z) bewegbares Ausdrückelement (18, 52) aufweist, sowie eine Gegenhalteeinrichtung (19, 34), die mindestens ein entlang der Entnahmerichtung (Z) bewegbares Gegenhalteelement (14a,b, 49b,c, 47) aufweist, sowie
eine Sensoreinrichtung (25, 53) zur Prüfung, ob das zwischen dem mindestens einen Ausdrückelement (18, 52) und dem mindestens einen Gegenhalteelement (14a,b, 49b,c) geklemmte Werkstückteil (20) vollständig vom Restwerkstück (2a) getrennt wurde,
**gekennzeichnet durch**
eine Steuerungseinrichtung (16), die konfiguriert ist, die Ausdrückeinrichtung (17, 32) und/oder die Gegenhalteeinrichtung (19, 34) anzusteuern, um das zwischen mindestens einem Ausdrückelement (18) der Ausdrückeinrichtung (17, 32) und
mindestens einem Gegenhalteelement (14a,b, 49b,c, 47) der Gegenhalteeinrichtung (19, 34) geklemmte Werkstückteil (20) entlang der Entnahmerichtung (Z) zu bewegen, sowie für den Fall, dass beim Prüfen, ob beim Bewegen entlang der Entnahmerichtung (Z) das Werkstückteil (20) vollständig vom Restwerkstück (2a) getrennt wurde, festgestellt wird, dass das Werkstückteil (20) nicht vollständig vom Restwerkstück (2a) getrennt wurde, die Klemmung des Werkstückteils (20) zu verringern oder vollständig aufzuheben und die Klemmung des Werkstückteils (20) anschließend wiederherzustellen.

14. Vorrichtung (1, 26) nach Anspruch 13, **dadurch gekennzeichnet, dass** die Steuerungseinrichtung (16) mit einem Ergebnisspeicher (54) verbunden ist oder diesen beinhaltet und ausgebildet ist, eine automatisierte Entnahmeprognose für die Entnahmewahrscheinlichkeit eines zu entnehmenden Werkstückteils (20) anhand von Geometrie-Parametern des Werkstückteils (20) und von im Ergebnisspeicher (54) gespeicherten Geometrie-Parametern von entnommenen Werkstückteilen (20) und einem jeweils zugehörigen Entnahmeergebnis zu. erstellen.

15. Vorrichtung (1, 26) nach Anspruch 13 oder 14, **dadurch gekennzeichnet, dass** in der Steuerungseinrichtung (16) Betriebs-Parametersätze des mindestens einen Ausdrückelements (18, 52) und/oder des mindestens einen Gegenhalteelements (14a,b, 47, 49b,c) beim Verringern oder vollständigen Aufheben der Klemmung des Werkstückteils (20) und beim anschließenden Wiederherstellen der Klemmung des Werkstückteils (20) und/oder beim erneuten Bewegen des Werkstückteils (20) entlang der Entnahmerichtung (Z) für eine Mehrzahl von Werkstückteilen (20) mit unterschiedlichen Geometrie-Parametern gespeichert sind und die Steuerungseinrichtung (16) ausgebildet ist, anhand der Geometrie-Parameter des zu entnehmenden Werkstückteils (20) mindestens einen Betriebs-Parametersatz für die Entnahme des Werkstückteils (20) aus dem Restwerkstück (2a) auszuwählen.

## Claims

1. A method for removing a workpiece part (20) from the remainder (2a) of the workpiece supported in a bearing plane (E), comprising:
moving the workpiece part (20), which is clamped between at least one ejector element (18, 52) of an ejection unit (17, 32) and at least one counter-holding element (14a,b, 49b,c, 47) of a counter-holding unit (19, 34), along a removal direction (Z), and
checking whether the workpiece part (20) has been completely separated from the remainder (2a) of the workpiece during movement along the removal direction (Z),
**characterized by**
reducing or completely canceling the clamping of the workpiece part (20) and subsequently resuming the clamping of the workpiece part (20) if it is determined during checking that the workpiece part (20) has not been completely separated from the remainder (2a) of the workpiece.

2. The method as claimed in claim 1, in which the step of reducing or completely canceling the clamping of the workpiece part (20) and of resuming the clamping of the workpiece part (20) is carried out multiple times.

3. The method as claimed in claim 1 or 2, in which, when canceling the clamping, contact between the ejector element (18, 52) and the workpiece part (20) is first of all canceled.

4. The method as claimed in any of the preceding claims, further comprising:
clamping the remainder (2a) of the workpiece between a workpiece support (27) for supporting the remainder (2a) of the workpiece in the bearing plane (E) and at least one further counter-holding element (49a,d, 47) during the movement of the workpiece part (20) along the removal direction (Z), wherein the clamping of the remainder (2a) of the workpiece is preferably reduced or completely canceled before the reduction or complete cancellation of the clamping of the workpiece part (20).

5. The method as claimed in any of the preceding claims, in which, during the reduction or release of the clamping, the workpiece part (20) is fixed on the at least one counter-holding element (49b,c, 47) of the counter-holding unit (34) situated in a fixing state.

6. The method as claimed in any of the preceding claims, in which, when the clamping of the workpiece part (20) has been canceled, the counter-holding unit (34) is moved in at least one direction (X, Y) perpendicular to the removal direction (Z) relative to the remainder (2a) of the workpiece and is preferably additionally moved along the removal direction (Z) relative to the remainder (2a) of the workpiece.

7. The method as claimed in any of the preceding claims, in which the workpiece part (20) is clamped by means of a plurality of counter-holding elements (14a,b) of the counter-holding unit (19), which are moved in opposite senses along the removal direction (Z) in order to separate the workpiece part (20) from the remainder (2a) of the workpiece.

8. The method as claimed in any of the preceding claims, in which at least one supporting surface (15a, 15b) of the counter-holding element (14a, 14b), said supporting surface supporting the workpiece part (20), is lowered below the bearing plane (E) of the remainder (2a) of the workpiece as the workpiece part (20) is moved along the removal direction (Z), and the ejector element (18) presses against the workpiece part (20) from above during the lowering process.

9. The method as claimed in any of the preceding claims, further comprising:
moving the workpiece part (20) along the removal direction (Z) with reduced or completely canceled clamping into the bearing plane (E) of the remainder (2a) of the workpiece, resuming the clamping of the workpiece part (20) between at least one ejector element (18, 52) of the ejection unit (17, 32) and at least one counter-holding element (14a,b, 49b,c, 47) of the counter-holding unit (19, 34), and renewed moving of the workpiece part (20) along the removal direction (Z), preferably at a speed (v2) which differs from the speed (v1) during the moving of the workpiece part (20) along the removal direction (Z).

10. The method as claimed in any of the preceding claims, further comprising:
storing geometric parameters of the workpiece part (20) to be removed, of a removal result and of operating parameter sets of the at least one ejector element (18, 52) and/or of the at least one counter-holding element (14a,b, 49b,c, 47) during the reduction or complete cancellation and subsequent resumption of the clamping of the workpiece part (20) and preferably of the remainder (2a) of the workpiece and/or during the renewed moving of the workpiece part (20) along the removal direction (Z) in a result memory (54).

11. The method as claimed in claim 10, further comprising: automatically generating a removal forecast for a workpiece part (20) to be removed on the basis of geometric parameters of the workpiece part (20) to be removed and of the geometric parameters, stored in the result memory (54), of removed workpiece parts (20) and the respectively associated removal result.

12. The method as claimed in claim 10 or 11, further comprising: automatically selecting operating parameter sets, stored in the result memory (54), in dependence of geometric parameters of the workpiece part (20) to be removed.

13. A device (1, 26) for removing a workpiece part (20) from the remainder (2a) of the workpiece supported in a bearing plane (E), comprising:
an ejection unit (17, 32), which has at least one ejector element (18, 52) movable along a removal direction (Z), and a counter-holding unit (19, 34), which has at least one counter-holding element (14a,b, 49b,c, 47) movable along the removal direction (Z), and
a sensor unit (25, 53) for checking whether the workpiece part (20) clamped between the at least one ejector element (18, 52) and the at least one counter-holding element (14a,b, 49b,c) has been completely separated from the remainder (2a) of the workpiece,
**characterized by**
a control unit (16) which is configured to control the ejection unit (17, 32) and/or the counter-holding unit (19, 34) in order to move the workpiece part (20), which is clamped between at least one ejector element (18) of the ejection unit (17, 32) and at least one counter-holding element (14a,b, 49b,c, 47) of the counter-holding unit (19, 34), along the removal direction (Z), and, in the case where it is determined, when checking whether the workpiece part (20) has been completely separated from the remainder (2a) of the workpiece during the movement along the removal direction (Z), that the workpiece part (20) has not been completely separated from the remainder (2a) of the workpiece, to reduce or completely cancel the clamping of the workpiece part (20) and subsequently to resume the clamping of the workpiece part (20).

14. The device (1, 26) as claimed in claim 13, **characterized in that** the control unit (16) is connected to a result memory (54) or contains said memory and is configured to generate an automated removal forecast for the removal probability of a workpiece part (20) to be removed on the basis of geometric parameters of the workpiece part (20) and of geometric parameters, stored in the result memory (54), of removed workpiece parts (20) and a respectively associated removal result.

15. The device (1, 26) as claimed in claim 13 or 14, **characterized in that** operating parameter sets of the at least one ejector element (18, 52) and/or of the at least one counter-holding element (14a,b, 47, 49b,c) during the reduction or complete cancellation of the clamping of the workpiece part (20) and during the subsequent resumption of the clamping of the workpiece part (20) and/or during the renewed moving of the workpiece part (20) along the removal direction (Z) are stored in the control unit (16) for a plurality of workpiece parts (20) having different geometric parameters, and the control unit (16) is configured to select at least one operating parameter set for the removal of the workpiece part (20) from the remainder (2a) of the workpiece on the basis of the geometric parameters of the workpiece part (20) to be removed.

## Revendications

1. Procédé de prélèvement d'une partie (20) d'une pièce, par dissociation d'avec une partie restante (2a) de ladite pièce positionnée dans un plan de stockage (E), incluant :
une mise en mouvement, le long d'une direction de prélèvement (Z), de la partie (20) de la pièce coincée entre au moins un élément expulseur (18, 52) d'un système d'expulsion (17, 32) et au moins un élément de contre-appui (14a, b, 49b, c, 47) d'un système d'adossement (19, 34), ainsi
qu'une vérification visant à établir si ladite partie (20) de la pièce a été intégralement séparée d'avec la partie restante (2a) de ladite pièce, au cours du mouvement le long de ladite direction de prélèvement (Z),
**caractérisé par**
une diminution ou une suppression totale du coincement de la partie (20) de la pièce, et par une réinstauration consécutive dudit coincement de ladite partie (20) de la pièce s'il est constaté, lors de la vérification, que ladite partie (20) de la pièce n'a pas été intégralement séparée d'avec la partie restante (2a) de ladite pièce.

2. Procédé selon la revendication 1, dans lequel l'étape de diminution ou de suppression totale du coincement de la partie (20) de la pièce, et de réinstauration dudit coincement de ladite partie (20) de la pièce, est exécutée à plusieurs reprises.

3. Procédé selon la revendication 1 ou 2, dans lequel, lors de la suppression du coincement, le contact entre l'élément expulseur (18, 52) et la partie (20) de la pièce est neutralisé dans un premier temps.

4. Procédé selon l'une des revendications précédentes, incluant par ailleurs : au cours du mouvement de la partie (20) de la pièce le long de la direction de prélèvement (Z), un coincement de la partie restante (2a) de ladite pièce entre un plateau (27) repose-pièces, affecté au positionnement de ladite partie restante (2a) de la pièce dans le plan de stockage (E), et au moins un élément supplémentaire de contre-appui (49a, d, 47), sachant que le coincement de ladite partie restante (2a) de la pièce est diminué ou totalement supprimé, de préférence, avant la diminution ou la suppression totale dudit coincement de la partie (20) de ladite pièce.

5. Procédé selon l'une des revendications précédentes, dans lequel, lors de la diminution ou du relâchement du coincement, la partie (20) de la pièce est consignée à demeure sur l'élément de contre-appui (49b, c, 47), à présence minimale, du système d'adossement (34) se trouvant dans un état de blocage à demeure.

6. Procédé selon l'une des revendications précédentes, dans lequel, lorsque le coincement est supprimé, le système d'adossement (34) meut la partie (20) de la pièce dans au moins une direction (X, Y) perpendiculaire à la direction de prélèvement (Z) par rapport à la partie restante (2a) de ladite pièce et additionnellement, de préférence, le long de ladite direction de prélèvement (Z) par rapport à ladite partie restante (2a) de la pièce.

7. Procédé selon l'une des revendications précédentes, dans lequel la partie (20) de la pièce est coincée au moyen de plusieurs éléments de contre-appui (14a, b) du système d'adossement (19) qui sont mis en mouvement dans des sens opposés, le long de la direction de prélèvement (Z), afin de séparer ladite partie (20) de la pièce d'avec la partie restante (2a) de ladite pièce.

8. Procédé selon l'une des revendications précédentes, dans lequel, au cours du mouvement de la partie (20) de la pièce le long de la direction de prélèvement (Z), au moins une surface de support (15a, 15b) de l'élément de contre-appui (14a, 14b), procurant un appui à ladite partie (20) de la pièce, est abaissée au-dessous du plan (E) de stockage de la partie restante (2a) de ladite pièce et l'élément expulseur (18) exerce, au cours dudit abaissement, une pression de haut en bas contre ladite partie (20) de la pièce.

9. Procédé selon l'une des revendications précédentes, incluant par ailleurs : lorsque le coincement est diminué ou totalement supprimé, une mise en mouvement de la partie (20) de la pièce, le long de la direction de prélèvement (Z), pour parvenir dans le plan (E) de stockage de la partie restante (2a) de ladite pièce ; une réinstauration dudit coincement de ladite partie (20) de la pièce entre au moins un élément expulseur (18, 52) du système d'expulsion (17, 32) et au moins un élément de contre-appui (14a, b, 49b, c, 47) du système d'adossement (19, 34) ; ainsi qu'une mise en mouvement réitérée de ladite partie (20) de la pièce, le long de ladite direction de prélèvement (Z), de préférence à une vitesse (v2) qui diffère de la vitesse (v1) présidant à la mise en mouvement de ladite partie (20) de la pièce le long de ladite direction de prélèvement (Z).

10. Procédé selon l'une des revendications précédentes, incluant par ailleurs : une mémorisation, dans une mémoire de résultats (54), de paramètres géométriques de la partie (20) de la pièce vouée au prélèvement, d'un résultat de prélèvement, et d'ensembles de paramètres fonctionnels de l'élément expulseur (18, 52) à présence minimale et/ou de élément de contre-appui (14a, b, 47, 49b, c) à présence minimale, lors de la diminution ou de la suppression totale, puis de la réinstauration consécutive du coincement de ladite partie (20) de la pièce, et préférentiellement de la partie restante (2a) de ladite pièce, et/ou lors de la mise en mouvement réitérée de ladite partie (20) de la pièce le long de la direction de prélèvement (Z).

11. Procédé selon la revendication 10, incluant par ailleurs : une génération automatique d'un pronostic de prélèvement relatif à une partie (20) de pièce vouée au prélèvement, à l'appui de paramètres géométriques de ladite partie (20) de la pièce vouée au prélèvement ; des paramètres géométriques de parties (20) de ladite pièce prélevées, mémorisés dans la mémoire de résultats (54) ; et du résultat de prélèvement respectivement associé.

12. Procédé selon la revendication 10 ou 11, incluant par ailleurs: une sélection automatique, en fonction de paramètres géométriques de la partie (20) de la pièce vouée au prélèvement, d'ensembles de paramètres fonctionnels mémorisés dans la mémoire de résultats (54).

13. Dispositif (1, 26) dévolu au prélèvement d'une partie (20) d'une pièce, par dissociation d'avec une partie restante (2a) de ladite pièce reposant dans un plan de stockage (E), comprenant :
un système d'expulsion (17, 32) muni d'au moins un élément expulseur (18, 52) mobile le long d'une direction de prélèvement (Z), ainsi qu'un système d'adossement (19, 34) pourvu d'au moins un élément de contre-appui (14a, b, 49b, c, 47) mobile le long de ladite direction de prélèvement (Z), de même qu'un
système de détection (25, 53) destiné à vérifier si ladite partie (20) de la pièce, coincée entre ledit élément expulseur (18, 52) à présence minimale et ledit élément de contre-appui (14a, b, 49b, c) à présence minimale, a été intégralement séparée d'avec la partie restante (2a) de ladite pièce,
**caractérisé par**
un système de commande (16), configuré pour piloter le système d'expulsion (17, 32) et/ou le système d'adossement (19, 34) en vue de mouvoir, le long de la direction de prélèvement (Z), la partie (20) de la pièce coincée entre au moins un élément expulseur (18) dudit système d'expulsion (17, 32) et au moins un élément de contre-appui (14a, b, 49b, c, 47) dudit système d'adossement (19, 34), ainsi qu'en vue de diminuer ou de supprimer totalement le coincement de la partie (20) de la pièce et de restaurer, dans l'enchaînement direct, ledit coincement de ladite partie (20) de la pièce pour le cas où, lors de la vérification visant à établir si, au cours du mouvement le long de ladite direction de prélèvement (Z), la partie (20) de la pièce a été intégralement séparée d'avec la partie restante (2a) de ladite pièce, il est constaté que ladite partie (20) de la pièce n'a pas été intégralement séparée d'avec la partie restante (2a) de ladite pièce.

14. Dispositif (1, 26) selon la revendication 13, **caractérisé par le fait que** le système de commande (16) est connecté à une mémoire de résultats (54), ou renferme cette dernière, et est conçu pour une génération automatisée d'un pronostic de prélèvement relatif à la probabilité de prélèvement d'une partie (20) de pièce vouée au prélèvement, à l'appui de paramètres géométriques de ladite partie (20) de la pièce ; de paramètres géométriques de parties (20) de ladite pièce prélevées, mémorisés dans la mémoire de résultats (54) ; et d'un résultat de prélèvement respectivement associé.

15. Dispositif (1, 26) selon la revendication 13 ou 14, **caractérisé par le fait que** des ensembles de paramètres fonctionnels de l'élément expulseur (18, 52) à présence minimale et/ou de l'élément de contre-appui (14a, b, 47, 49b, c) à présence minimale sont mémorisés dans le système de commande (16), pour une pluralité de parties (20) de pièce dotées de paramètres géométriques différents, lors de la diminution ou de la suppression totale du coincement de la partie (20) de la pièce et lors de la réinstauration consécutive dudit coincement de la partie (20) de la pièce, et/ou lors de la mise en mouvement réitérée de ladite partie (20) de la pièce le long de la direction de prélèvement (Z), et ledit système de commande (16) est conçu pour sélectionner, à l'appui des paramètres géométriques de la partie (20) de la pièce vouée au prélèvement, au moins un ensemble de paramètres fonctionnels affectés au prélèvement de ladite partie (20) de la pièce par dissociation d'avec la partie restante (2a) de ladite pièce.
